# EUROPEAN PATENT SPECIFICATION

(11) **EP 4 462 880 B1**
(45) Date of publication and mention of the grant of the patent: **11.11.2026**
(21) Application number: 24201126.0
(22) Date of filing: 20.11.2020
(51) Int. Cl.: H04W 36/00, H04W 36/08

(54) **TERMINAL APPARATUS AND COMMUNICATION SYSTEM**
ENDGERÄT UND KOMMUNIKATIONSSYSTEM
APPAREIL TERMINAL ET SYSTEME DE COMMUNICATION

(30) Priority: 26.11.2019 JP 2019213179
(43) Date of publication of application: 13.11.2024
(60) Divisional application: 26210419.3
(62) Document number(s) of the earlier application(s) in accordance with Art. 76 EPC: 20892011.6 / 4 068 839
(73) Proprietor: MITSUBISHI ELECTRIC CORPORATION, Chiyoda-ku Tokyo 100-8310 (JP)
(72) Inventor: SHIMODA, Tadahiro, Tokyo, 100-8310 (JP); MOCHIZUKI, Mitsuru, Tokyo, 100-8310 (JP)
(74) Representative: Meissner Bolte Partnerschaft mbB

(56) References cited:
- KR-A- 20180 136 862
- US-A1- 2019 356 536
- US-A1- 2020 107 390
- HUAWEI: "Fast MCG link Recovery with SRB3 and split SRB1", vol. RAN WG3, no. Reno, USA; 20191118 - 20191122, 9 November 2019 (2019-11-09), XP051824074, Retrieved from the Internet <URL:https://ftp.3gpp.org/tsg_ran/WG3_Iu/TSGR3_106/Docs/R3-197227.zip R3-197227.doc> [retrieved on 20191109]

## Description

### Technical Field

The present invention relates to a radio communication technology.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

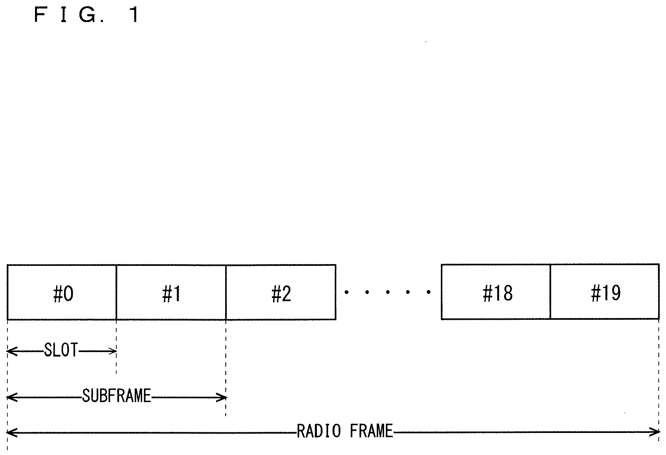

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgment (Ack) / negative acknowledgment (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a data demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions effectively by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS38.211 V15.7.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Furthermore, several new technologies have been studied in 3GPP. Examples of the technologies include a technology for adding some redundancy to a communication path (may be hereinafter referred to as a redundant path) to ensure the reliability (see Non-Patent Document 20 (TR23.725)). Document 3GPP R3-197227 discloses fast MCG link recovery via SRB 3. Document US 2020/107390 A1 teaches UE suspension of the MCG and continuation on the SCG. Document D US 2019/356536 A1 shows selection of the SCG as a new PCell after MCG failure.

### Prior-Art Documents

### Non-Patent Documents

| | |
|---|---|
| Non-Patent Document 1: | 3GPP TS 36.300 V15.7.0 |
| Non-Patent Document 2: | 3GPP S1-083461 |
| Non-Patent Document 3: | 3GPP TR 36.814 V9.2.0 |
| Non-Patent Document 4: | 3GPP TR 36.912 V15.0.0 |
| Non-Patent Document 5: | "Scenarios, requirements and KPIs for 5G mobile and wireless system", ICT-317669-METIS/D1.1 |
| Non-Patent Document 6: | 3GPP TR 23.799 V14.0.0 |
| Non-Patent Document 7: | 3GPP TR 38.801 V14.0.0 |
| Non-Patent Document 8: | 3GPP TR 38.802 V14.2.0 |
| Non-Patent Document 9: | 3GPP TR 38.804 V14.0.0 |
| Non-Patent Document 10: | 3GPP TR 38.912 V15.0.0 |
| Non-Patent Document 11: | 3GPP RP-172115 |
| Non-Patent Document 12: | 3GPP TS 37.340 V15.7.0 |
| Non-Patent Document 13: | 3GPP TS 38.211 V15.7.0 |
| Non-Patent Document 14: | 3GPP TS 38.213 V15.7.0 |
| Non-Patent Document 15: | 3GPP TS 38.214 V15.7.0 |
| Non-Patent Document 16: | 3GPP TS 38.300 V15.7.0 |
| Non-Patent Document 17: | 3GPP TS 38.321 V15.7.0 |
| Non-Patent Document 18: | 3GPP TS 38.212 V15.7.0 |
| Non-Patent Document 19: | 3GPP RP-161266 |
| Non-Patent Document 20: | 3GPP TR23.725 V16.2.0 |
| Non-Patent Document 21: | 3GPP S1-192758 |
| Non-Patent Document 22: | 3GPP TS 38.331 V15.7.0 |
| Non-Patent Document 23: | 3GPP TS 36.331 V15.7.0 |
| Non-Patent Document 24: | 3GPP TS 23.501 V16.2.0 |
| Non-Patent Document 25: | 3GPP TS 23.502 V16.2.0 |
| Non-Patent Document 26: | 3GPP TS 38.401 V15.6.0 |

### Summary

The invention is defined by the appended claims.

The object, features, aspects and advantages of the present invention will become more apparent from the following detailed description and the accompanying drawings of the present invention. The appended set of claims are based on the embodiment as marked as "The First Modification of the Second Embodiment", the other embodiments of the description are not part of the invention as claimed in the appended claims.

### Brief Description of Drawings

- FIG. 1: is a diagram illustrating the configuration of a radio frame for use in an LTE communication system.
- FIG. 2: is a block diagram showing the overall configuration of an LTE communication system 200 under discussion of 3GPP.
- FIG. 3: is a block diagram illustrating an overall configuration of a NR communication system 210 that has been discussed in 3GPP.
- FIG. 4: illustrates a structure of the DC to be performed by an eNB and a gNB that are connected to the EPC.
- FIG. 5: illustrates a structure of the DC to be performed by gNBs that are connected to the NG core.
- FIG. 6: illustrates a structure of the DC to be performed by the eNB and the gNB that are connected to the NG core.
- FIG. 7: illustrates a structure of the DC to be performed by the eNB and the gNB that are connected to the NG core.
- FIG. 8: is a block diagram showing the configuration of a user equipment 202 shown in FIG. 2.
- FIG. 9: is a block diagram showing the configuration of a base station 203 shown in FIG. 2.
- FIG. 10: is a block diagram showing the configuration of an MME.
- FIG. 11: is a block diagram illustrating a configuration of the 5GC.
- FIG. 12: is a flowchart showing an outline from a cell search to an idle state operation performed by a communication terminal (UE) in LTE communication system.
- FIG. 13: illustrates an example structure of a cell in an NR system.
- FIG. 14: is a sequence diagram illustrating establishment of communication using redundant paths using a plurality of UEs according to the first embodiment.
- FIG. 15: is a sequence diagram illustrating establishment of communication using redundant paths using a plurality of UEs according to the first embodiment.
- FIG. 16: is a sequence diagram illustrating establishment of communication using redundant paths using a plurality of UEs according to the first embodiment.
- FIG. 17: is a sequence diagram illustrating, in the event of a handover in one redundant path, operations for restricting a handover in another redundant path and operations for removing the restriction according to the first embodiment.
- FIG. 18: is a sequence diagram illustrating, in the event of a handover in one redundant path, operations for restricting a handover in another redundant path and operations for removing the restriction according to the first embodiment.
- FIG. 19: is a sequence diagram illustrating, in the event of a handover in one redundant path, operations for restricting a handover in another redundant path and operations for removing the restriction according to the first embodiment.
- FIG. 20: is a sequence diagram illustrating operations for canceling the handover in another redundant path and operations for initiating the handover, due to a communication interruption in one redundant path according to the first modification of the first embodiment.
- FIG. 21: is a sequence diagram illustrating operations for canceling the handover in another redundant path and operations for initiating the handover, due to a communication interruption in one redundant path according to the first modification of the first embodiment.
- FIG. 22: is a sequence diagram illustrating operations of the UE using the redundant paths by the DC for maintaining the security key of the secondary base station before or after the handover of the master base station according to the second embodiment.
- FIG. 23: is a sequence diagram illustrating operations of the UE using the redundant paths by the DC for maintaining the security key of the secondary base station before or after the handover of the master base station according to the second embodiment.
- FIG. 24: is a sequence diagram illustrating operations of the UE using the redundant paths by the DC for modifying the security key of the secondary base station prior to the handover of the master base station according to the second embodiment.
- FIG. 25: is a sequence diagram illustrating operations of the UE using the redundant paths by the DC for modifying the security key of the secondary base station prior to the handover of the master base station according to the second embodiment.
- FIG. 26: is a sequence diagram illustrating the first example of operations for continuing the communication with the secondary base station after an MCG failure according to the first modification of the second embodiment.
- FIG. 27: is a sequence diagram illustrating the second example of operations for continuing the communication with the secondary base station after an MCG failure according to the first modification of the second embodiment.

### Description of Embodiments

### The First Embodiment

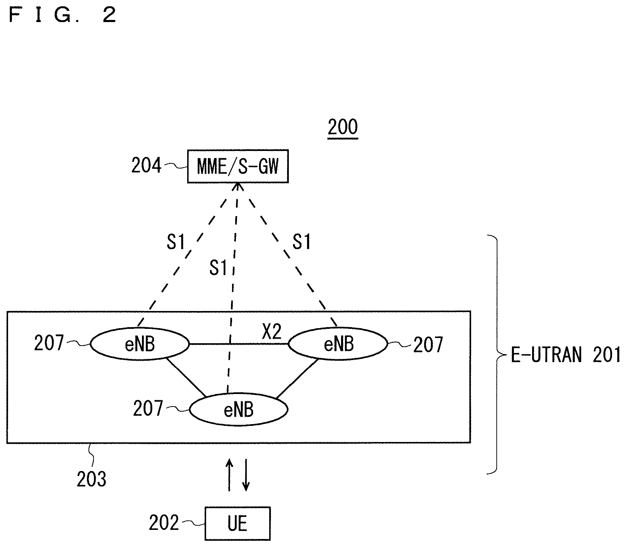

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC_IDLE and RRC_CONNECTED.

In RRC_IDLE, public land mobile network (PLMN) selection, system information (SI) broadcast, paging, cell reselection, mobility, and the like are performed. In RRC_CONNECTED, the user equipment has RRC connection and is capable of transmitting and receiving data to and from a network. In RRC_CONNECTED, for example, handover (HO) and measurement of a neighbor cell are performed.

The base stations 203 include one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

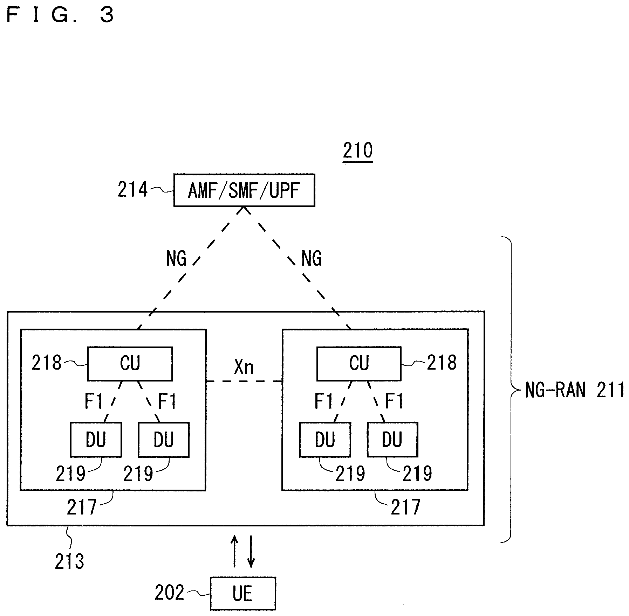

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NR base station (NG-RAN NodeB (gNB))") 213, and transmits and receives signals to and from the NR base station 213 via radio communication. Furthermore, the core network is referred to as a 5G Core (5GC).

When control protocols for the UE 202, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC_CONNECTED, and RRC_INACTIVE.

RRC_IDLE and RRC_CONNECTED are identical to those in LTE. In RRC_INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214. The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

The 5G communication system may include the Unified Data Management (UDM) function and the Policy Control Function (PCF) described in Non-Patent Document 24 (3GPP TS23.501 V16.2.0). The UDM and/or the PCF may be included in the 5GC unit in FIG. 3.

The 5G communication system may include the Non-3GPP Interworking Function (N3IWF) described in Non-Patent Document 24 (3GPP TS23.501 V16.2.0). The N3IWF may terminate an Access Network (AN) with the UE in a non-3GPP access with the UE.

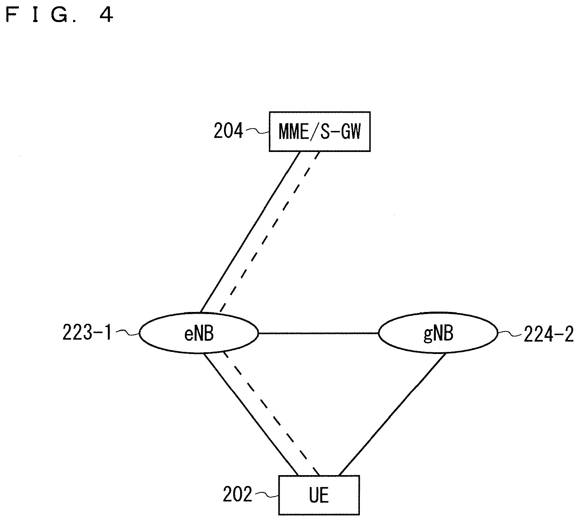

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

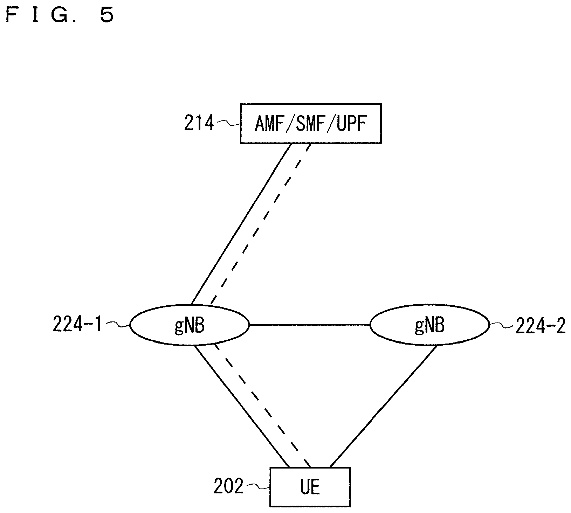

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

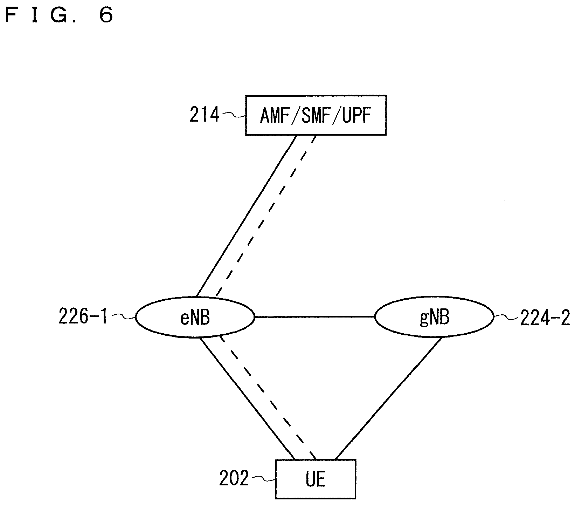

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

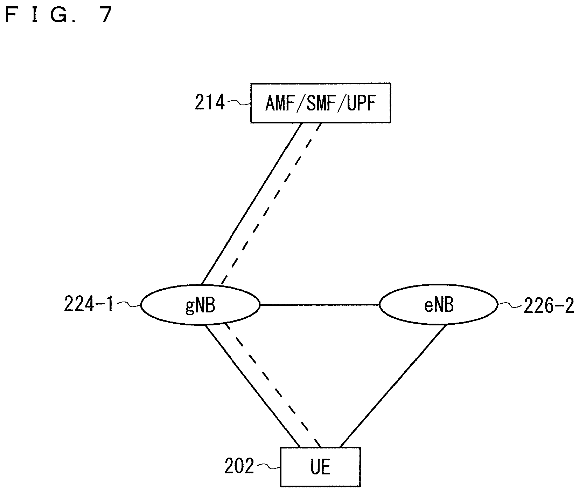

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

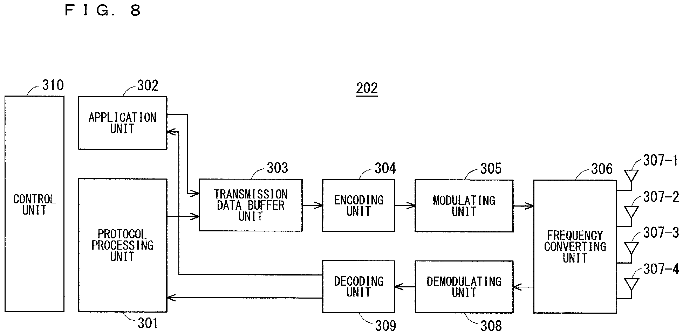

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process.

The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation. The demodulated data is passed to a decoding unit 309, and is subjected to a decoding process such as error correction.

Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

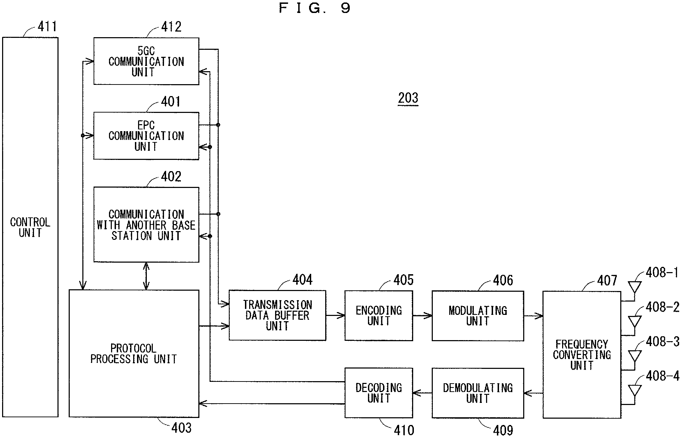

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station. The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction.

Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401, and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

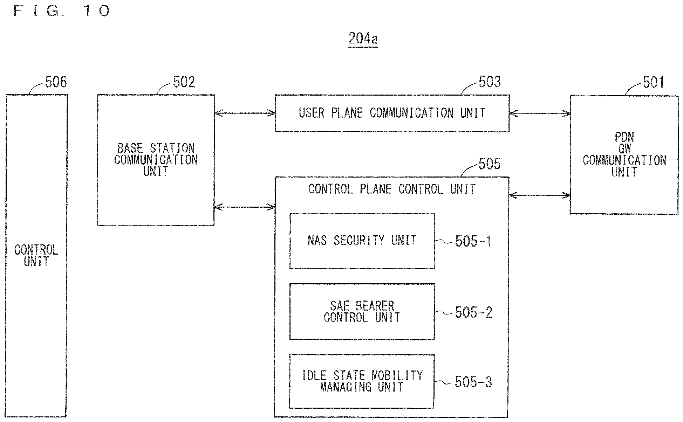

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface. In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility managing unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer.

The idle state mobility managing unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility managing unit 505-3 may manage the CSG of the eNBs 207 to be connected to the MME 204a, CSG IDs, and a whitelist.

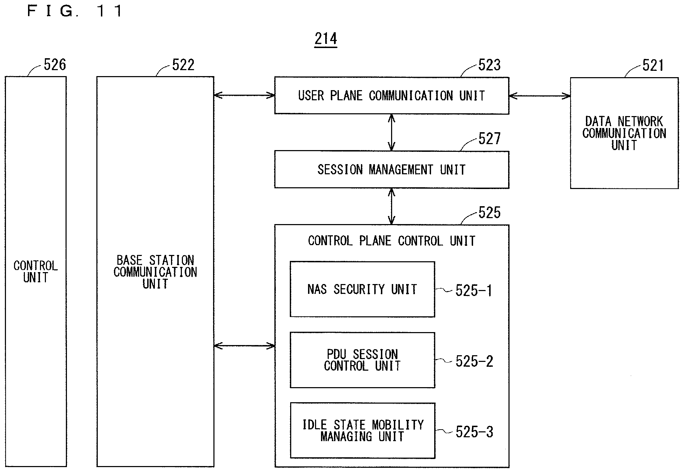

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213.

When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data to a session management unit 527 through the user plane communication unit 523. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility managing unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214. The idle state mobility managing unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

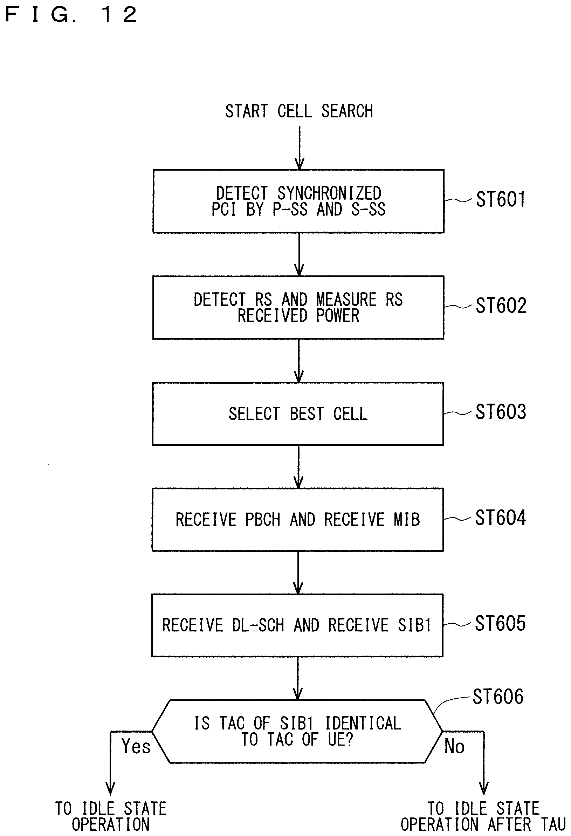

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP) for the synchronized cells. The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB 1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

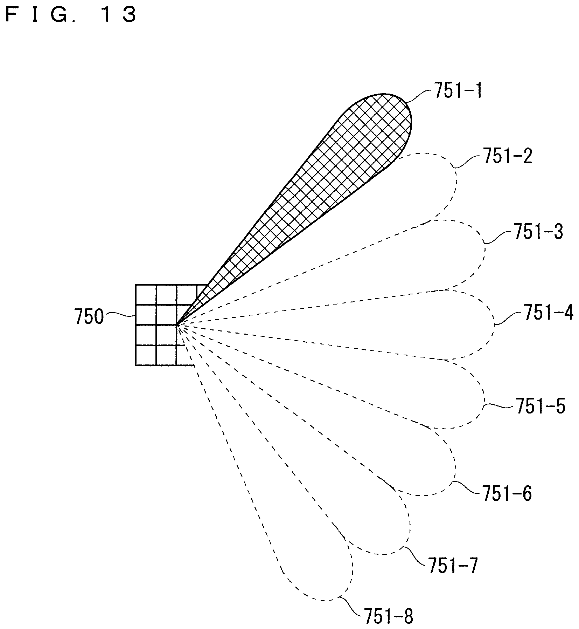

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

In the communication using redundant paths, the same data may be transmitted and received through each of the paths. A transmission host may duplicate data, and transmit the duplicated data to respective devices on the paths. A reception host may retain one of pieces of the data received from the transmission host, and remove the remaining pieces. The transmission host may be a host connected to a data network (DN) or a host connected to the UE. The reception host may be a host connected to the UE or a host connected to a DN.

The communication using redundant paths may be communication using one UE or a plurality of UEs.

In a configuration of redundant paths using the plurality of UEs, the UEs may be connected to different base stations. The base stations may be connected to different UPFs. The UPFs may be connected to the same DN or different DNs. The base stations may be connected to the same AMF or different AMFs. The UPFs may be connected to the same SMF or different SMFs. In the configuration of redundant paths, each of the UEs and a corresponding one of the UPFs may establish a PDU session.

The configuration of redundant paths using the plurality of UEs may be used for transmitting and receiving small data (Non-Patent Document 9 (TR38.804)). For example, a plurality of paths through which the UE transmits data to a DN via a base station, an AMF, a SMF, and a UPF may be provided in the uplink communication. As another example, a plurality of paths through which the DN transmits data to the UE via the UPF, the SMF, the AMF, and the base station may also be provided in the downlink communication. The base stations on the paths may be different from each other. The same may apply to the AMFs, the SMFs, and the UPFs. This can, for example, enhance the reliability in transmitting and receiving the small data.

The redundant communication using the plurality of UEs has the following problem. While communication is interrupted in a path, the mobility of the UEs on the remaining paths stops the communication in all the redundant paths. This consequently causes problems of failing to ensure the reliability of the communication and establish the time-sensitive communications (TSC).

The first embodiment discloses a method for solving the problems.

The base station restricts the mobility of the UEs when communication in other redundant paths is impossible. As another example of the aforementioned case, the base station need not release or pause the RRC connection with the UEs.

Examples of the case where the communication is impossible may include the mobility of the UEs in other redundant paths, a case where the UEs in the other redundant paths are not RRC_CONNECTED or CM_CONNECTED, a case where each device in a NW in the other redundant paths is powered down, a case where the UEs in the other redundant paths detect Radio Link Failures (RLFs) and/or beam failures, a communication interruption between the base station and a core network in the other redundant paths and/or a communication interruption in the core network, and a combination of these.

Examples of the communication interruption between the base station and the core network may include a communication interruption between the base station and the AMF (e.g., a communication interruption through the N2 interface), and a communication interruption between the base station and the UPF (e.g., a communication interruption through the N3 interface).

Examples of the communication interruption in the core network may include a communication interruption between the UPF and the SMF (e.g., a communication interruption through the N4 interface), a communication interruption between the UPF and the DN (e.g., a communication interruption through the N6 interface), a communication interruption between the UPFs (e.g., a communication interruption through the N9 interface), a communication interruption between the AMF and the SMF (e.g., a communication interruption through the N11 interface), and a combination of these.

The base station in a redundant path through which communication is impossible (may be hereinafter referred to as a communication-interrupted redundant path) notifies a base station in another redundant path (may be hereinafter referred to as a non-communication-interrupted redundant path) of information indicating that communication with the UE in its own path is impossible. The information may include, for example, information on a redundant path to be described later or a cause of impossible communication.

Examples of the information on a redundant path may include an identifier of the path, information on the UE in the path, information on the base station in the path, information on the UPF in the path, information on the PDU session in the path, and a combination of these.

Examples of the cause of impossible communication may include the mobility of the UEs in other redundant paths, the fact that the UEs in the other redundant paths are not RRC_CONNECTED or CM_CONNECTED, the fact that each device in the NW in the other redundant paths is powered down, the fact that the UEs in the other redundant paths detect Radio Link Failures (RLFs) and/or beam failures, a communication interruption between the base station and a core network in the other redundant paths and/or a communication interruption in the core network, and a combination of these.

The base station in a communication-interrupted redundant path may notify, through the AMF, information indicating that communication with the UE in its own path is impossible. The AMF may notify the information to a base station in a non-communication-interrupted redundant path. The AMF may notify the information to the base station in the non-communication-interrupted redundant path, through the AMF in the non-communication-interrupted redundant path. As another example, the base station in the communication-interrupted redundant path may notify the information to a base station in the communication-interrupted redundant path through the AMF in the non-communication-interrupted redundant path.

The base station in the non-communication-interrupted redundant path may restrict the mobility (for example, handover) of the UEs connected to its own base station, or need not release or pause the RRC connection with the UEs.

The signaling to be used for instructing stopping measurement reporting may be newly provided. The signaling may include, for example, information indicating measurement whose report is to be stopped (for example, a measurement object). This enables, for example, the UE to promptly understand the measurement object whose measurement reporting should be stopped.

The signaling may be, for example, the RRC signaling. This enables, for example, the base station to notify the UE of a large amount of information. As another example, the signaling may be the MAC signaling. This enables, for example, the base station to promptly instruct the UE to stop the measurement reporting. As another example, the signaling may be the L1/L2 signaling. This enables, for example, the base station to more promptly instruct the UE to stop the measurement reporting.

The base station in another path may instruct the UE connected to its own base station to stop the measurement reporting. The base station may issue the instruction, for example, via the new signaling or the existing signaling. The base station may instruct the UE to stop the measurement reporting, using the information as a trigger. The UE may stop transmitting the measurement report to the base station, using the instruction as a trigger. The measurement report may be the measurement report using an event as a trigger which is disclosed in Non-Patent Document 22 (TS38.331) and/or Non-Patent Document 23 (TS36.331). This can, for example, restrict the UE from measurement reporting while the mobility of the UE is restricted. This can reduce the amount of signaling between the base station and the UE.

As another example, the base station in the communication-interrupted redundant path may release a measurement configuration for the UE connected to its own base station. The measurement configuration may be, for example, the measurement configuration using an event as a trigger which is disclosed in Non-Patent Document 22 (TS38.331) and/or Non-Patent Document 23 (TS36.331). The base station may release the measurement configuration via the RRC signaling, the MAC signaling, or the L1/L2 signaling. The UE may release the measurement configuration for its own UE, using the release signaling. This can, for example, reduce the memory usage in the base station and/or the UE.

The base station in the redundant path through which communication is impossible may notify a base station in another path of information indicating that the communication with the UE in its own path has been recovered. Examples of the information indicating that the communication has been recovered may include information indicating the completion of the mobility of the UE and information indicating that the UE returns to RRC_CONNECTED. The base station in another path may allow the mobility (for example, handover) of the UE connected to its own base station, or may release or pause the RRC connection with the UE.

The signaling to be used for instructing start or resumption of measurement reporting may be newly provided. The signaling may include, for example, information indicating measurement whose report is to be started or resumed (for example, a measurement object). This enables, for example, the UE to promptly understand the measurement object whose measurement reporting should be resumed. The signaling may be, for example, the RRC signaling. This enables, for example, the base station to notify the UE of a large amount of information. As another example, the signaling may be the MAC signaling. This enables, for example, the base station to promptly instruct the UE to resume the measurement reporting. As another example, the signaling may be the L1/L2 signaling. This enables, for example, the base station to more promptly instruct the UE to resume the measurement reporting.

The base station may instruct the UE to resume the measurement reporting. The base station may issue the instruction, for example, via the new signaling or the existing signaling. The base station may instruct the UE to resume the measurement reporting, using information indicating that the communication between the base station and the UE in another redundant path has been recovered. The UE may resume transmitting the measurement report to the base station, using the instruction as a trigger. This can, for example, improve the stability of the communication quality of the redundant path.

The signaling for instructing stopping the measurement reporting may be the same as that for instructing start or resumption of the measurement reporting. The signaling may include, for example, information indicating stopping the measurement reporting, information on measurement whose measurement reporting is to be stopped (e.g., a measurement object), information indicating start or resumption of the measurement reporting, or information on measurement whose measurement reporting is to be started or resumed (e.g., a measurement object). This can, for example, reduce the number of signaling types to be added. Consequently, the complexity of adding a function for stopping/resuming the measurement reporting in the communication system can be mitigated.

As another example, the base station in the communication-interrupted redundant path may reestablish the measurement configuration for the UE connected to its own base station. The base station may reestablish the measurement configuration when releasing the measurement configuration for the UE. The reestablished configuration may be different from that before the release. The measurement configuration may be, for example, the measurement configuration using an event as a trigger which is disclosed in Non-Patent Document 22 (TS38.331) and/or Non-Patent Document 23 (TS36.331). The base station may establish the configuration, for example, via the RRC signaling. The UE may reestablish the measurement configuration for its own UE, using the release signaling. This can, for example, improve the flexibility in establishing the measurement configuration.

The base station may vary conditions for starting/stopping the measurement reporting between the UE using a redundant configuration and the UE without using the redundant configuration. The measurement reporting may be the measurement reporting using an event as a trigger which is disclosed in Non-Patent Document 22 (TS38.331) and/or Non-Patent Document 23 (TS36.331). The base station may perform operations under the different conditions for starting/stopping the measurement reporting, for example, by varying a threshold for starting/stopping the measurement reporting. The base station may determine whether the conditions for starting/stopping the measurement reporting vary using, for example, information (1) to be described later as information on redundant paths.

The base station may, for example, moderate the conditions for starting/stopping the measurement reporting by the UE using the redundant configuration more than the conditions for starting/stopping the measurement reporting by the UE without using the redundant configuration. This enables, for example, the handover before the communication quality deteriorates, when compared to the case without the redundant configuration. Consequently, the link blockage in its redundant configuration which is caused by the deteriorating communication quality during restriction of the handover in its redundant configuration can be prevented.

As another example, the base station may tighten the conditions for starting/stopping the measurement reporting by the UE using the redundant configuration more than the conditions for starting/stopping the measurement reporting by the UE without using the redundant configuration. This can, for example, reduce the frequency of the handover, and consequently increase the communication efficiency.

Before the UE using redundant paths detects an RLF, the base station may notify a base station in another redundant path that the UE in its own base station is likely to have an RLF or that the uplink signal from the UE in its own base station cannot be received for a certain period. The base station may give the notification via the AMF. The base station may give the notification, for example, when the base station cannot receive the uplink signal from the UE for a certain period. Upon receipt of the notification, the base station in another redundant path may refrain from the handover of the UE or restrict the UE from measurement reporting. This can, for example, prevent its own redundant path from having an RLF or a beam failure after the handover in the other redundant path is started. Consequently, blockage in both of the communication paths can be prevented.

The certain period may be determined in a standard. The certain period may be defined as, for example, a period shorter than the period of the TSC. As another example, the base station may determine the certain period. For example, the base station may determine the certain period as a period shorter than the period of the TSC. The base station may semi-statically notify the UE of the certain period, for example, via the RRC signaling.

This can, for example, enhance the reliability in notifying the certain period. As another example, the base station may dynamically notify the UE of the certain period, for example, via the MAC signaling. This enables, for example, the base station to promptly notify the certain period. As another example, the base station may notify the certain period via the L1/L2 signaling. This enables, for example, the base station to more promptly notify the certain period.

The base station may notify the base station in another redundant path of information indicating that the communication with the UE in its own base station has been recovered, using reception of an uplink signal from the UE as a trigger. The base station may give the notification via the AMF. For example, in the case where the base station transmits, to the base station in another redundant path, information indicating that the uplink signal from the UE cannot be received for a certain period, the base station may give the notification. Upon receipt of the notification, the base station in another redundant path may stop refraining from the handover of the UE or remove the restriction on the measurement reporting by the UE. This can, for example, prevent a continued state where the UE cannot be handed over in another redundant path when the communication path with the UE has been recovered.

The UE may notify the base station of information on redundant paths. For example, the UE may notify the information via the RRC signaling. The base station may forward the information to the AMF. For example, the base station may forward the information to the AMF via the signaling over the N2 interface. As another example, the UE may notify the AMF of the information. The UE may forward the information to the AMF via the NAS signaling.

The following (1) to (17) are disclosed as examples of the information on redundant paths.
(1) Information on the presence or absence of communication using the redundant paths
(2) Information on geometry of the redundant paths
(3) Information on the number of redundant paths in the transmission and reception hosts
(4) Identifiers of the redundant paths to be used by its own UE
(5) Identifiers of its own UE: the following (5-1) to (5-5) are disclosed as examples of (5).
   (5-1) An International Mobile Subscriber Identity (IMSI) of its own UE
   (5-2) A Mobile Subscriber Integrated Services Digital Network Number (MSISDN) of its own UE
   (5-3) A 5G S-Temporary Mobile Subscription Identifier (5G-S-TMSI) of its own UE
   (5-4) A UE-ID of its own UE
   (5-5) Combinations of (5-1) to (5-4) above
(6) Information on combinations of the redundant paths
(7) Identifiers of other redundant paths
(8) Identifiers of the UEs in the other redundant paths: the following (8-1) to (8-5) are disclosed as examples of (8).
   (8-1) International Mobile Subscriber Identities (IMSIs) of the UEs in the other redundant paths
   (8-2) Mobile Subscriber Integrated Services Digital Network Numbers (MSISDNs) of the UEs in the other redundant paths
   (8-3) 5G S-Temporary Mobile Subscription Identifiers (5G-S-TMSIs) of the UEs in the other redundant paths
   (8-4) UE-IDs of the UEs in the other redundant paths
   (8-5) Combinations of (8-1) to (8-4) above
(9) Information on a base station to be connected in its own redundant path
(10) Information on the AMF to be connected in its own redundant path
(11) Information on the UPF to be connected in its own redundant path
(12) Information on the SMF to be connected in its own redundant path
(13) Information on a base station to be connected in another redundant path
(14) Information on the AMF to be connected in another redundant path
(15) Information on the UPF to be connected in another redundant path
(16) Information on the SMF to be connected in another redundant path
(17) Combinations of (1) to (16) above

The information (1) may be, for example, information indicating whether its own UE configures redundant communication. A NW device may use the information for the measurement configuration for the UE. This can, for example, reduce the number of occurrences of the mobility of the UE establishing the redundant paths. This can consequently reduce the number of communication interruptions caused by the mobility.

Examples of the information (2) may include information indicating that the redundant paths are configured by connection of each of UEs to different base stations and different UPFs, information indicating that the redundant paths are configured by connection of one UE to a plurality of base stations and a plurality of UPFs, and information indicating that the redundant paths are configured by connection of one UE to one base station and one or more UPFs. The UE may hold information on the configuration that its own UE can take, as the UE capability or in a SIM. A core NW device may determine the redundant configuration of the UE using the information (2). This enables, for example, the transmission and reception hosts to configure the optimal redundant paths according to the communication environment, etc.

The number of the redundant paths in (3) may be, for example, two or three or more. The NW device may inquire of other NWs about information on the other redundant paths, using the information. This enables, for example, the NW device to inquire about information on the other redundant paths as many as required. Consequently, the signaling efficiency in the communication system can be increased.

The information (4) may be represented, for example, by serial numbers starting from 0 or 1, in a form of flags using a bitmap, or by another form. The NW device may determine whether the signaling (e.g., an inquiry) from another NW device is about its own redundant path, using the information. This can, for example, increase the signaling efficiency in the communication system.

For example, information (5-1) and/or (5-2) may be used as the information (5). This can identify the UE in another path even when NWs (for example, PLMNs) to be used in the redundant paths are different. Consequently, the complexity in the control over the redundant paths can be avoided. As another example, the information (5-3) and/or (5-4) may be used. This can promptly identify the UE. The information (5) may include information on the types of the identifiers. This enables, for example, the NW device to promptly understand the types of the identifiers, and consequently promptly perform processes in the communication system.

The information (6) may be, for example, an identifier for identifying a pair of redundant paths. This enables, for example, the NW device to promptly understand a redundant path paired with its own redundant path. As another example, identifiers of UEs establishing pairs of redundant paths, for example, (5-1), (5-2), (8-1), and (8-2), or combinations of these may be used. This, for example, produces the same advantages as previously described.

The information (7) may be the same as the information (4). This, for example, produces the same advantages as those of the information (4).

The information (8) may be the same as the information (5). This, for example, produces the same advantages as those of the information (5).

Examples of the information (9) may include the gNB-ID, an NR cell global ID, the global gNB-ID, and a network address of the base station (e.g., an IP address) which are disclosed in Non-Patent Document 16 (TS 38.300).

The base station may notify each device in another redundant path of the information (9) on its own redundant path. The notification may include the information (5). The AMF or the SMF may give the notification. Each device in another redundant path, for example, the base station in the other redundant path may reject a connection request from the UE, using the information (9) indicating its own base station, or the fact that the UE to be connected is the UE indicated by the information (5). This can, for example, prevent reduction in a redundant degree due to an overlap between base stations in a plurality of redundant paths.

Examples of the information (10) may include the AMF Name disclosed in Non-Patent Document 16 (TS 38.300), a Globally Unique AMF Identifier (GUAMI) disclosed in Non-Patent Document 24 (TS23.501), and a network address of the AMF (e.g., an IP address). Alternatively, the information (10) may be, for example, an identifier configured from one or more of an AMF region ID, an AMF set ID, and an AMF pointer that are disclosed in Non-Patent Document 24.

The base station may notify each device in another redundant path of the information (10) on its own redundant path. The AMF or the SMF may give the notification. Each device in another redundant path, for example, the base station in the other redundant path may be connected to the AMF identical to that in the information (10). This enables, for example, efficient communication using the redundant paths. As another example, the base station in the other redundant path may be connected to the AMF different from that in the information (10). This can, for example, increase a redundant degree in the C-plane, and consequently increase the robustness in the communication system.

Examples of the information (11) may include the UPF ID disclosed in Non-Patent Document 25 (TS23.502), and a network address of the SMF (e.g., an IP address).

The base station may notify each device in another redundant path of the information (11) on its own redundant path. The AMF or the SMF may give the notification. Each device in another redundant path, for example, the SMF in the other redundant path may restrict the UPF to be used in the redundant path of its own SMF. For example, the SMF need not be connected to the UPF included in the information. This can, for example, prevent reduction in a redundant degree due to an overlap between UPFs in a plurality of redundant paths.

Examples of the information (12) may include the SMF ID, and a network address of the base station (e.g., an IP address) which are disclosed in Non-Patent Document 25 (TS23.502).

The base station may notify each device in another redundant path of the information (12) on its own redundant path. The AMF or the SMF may give the notification. Each device in another redundant path, for example, the AMF in the other redundant path may be connected to the SMF identical to that in the information (12). This can, for example, efficiently control the communication using the redundant paths. As another example, the AMF may be connected to the SMF different from that in the information (12). This can, for example, increase a redundant degree in the C-plane, and consequently increase the robustness in the communication system.

The information (13) may be, for example, the same as the information (9). The UE may determine a base station to which the UE is connected, using the information (13). This can, for example, prevent reduction in a redundant degree due to an overlap between base stations in a plurality of redundant paths.

The information (14) may be, for example, the same as the information (10). The base station may determine the AMF to which the UE is connected through the N1 interface, using the information (14). For example, the base station may determine that the AMF to which the UE is connected is the AMF identical to that in the information (14). This enables, for example, efficient communication using the redundant paths. As another example, the base station may determine that the AMF to which the UE is connected is the AMF different from that in the information (14). This can, for example, increase a redundant degree in the C-plane, and consequently increase the robustness in the communication system.

The information (15) may be, for example, the same as the information (11). The SMF may restrict the UPF to be used in the redundant path of its own SMF using the information (15), and, for example, need not be connected to the UPF included in the information. This can, for example, prevent reduction in a redundant degree due to an overlap between UPFs in a plurality of redundant paths.

The information (16) may be, for example, the same as the information (12). The AMF may be connected to the SMF identical to that in the information (16). This can, for example, efficiently control the communication using the redundant paths. As another example, the AMF may be connected to the SMF different from that in the information (16). This can, for example, increase a redundant degree in the C-plane, and consequently increase the robustness in the communication system.

The information (1) to (8) may be included in, for example, the UE capability or the SIM in the UE.

The UE may notify the information on redundant paths when the UE is registered in the NW. The UE may notify, for example, the base station of the information. For example, the UE may include the information in the registration request signaling, and notify the information. As another example, the UE may notify the information when establishing the PDU session. As another example, the UE may notify the information in a service request. As another example, the UE may notify the information when establishing a connection with the AMF. For example, the UE may notify the AMF of the information.

The base station may determine the AMF to which the UE is connected, using the information. The AMF may determine the SMF, using the information. The SMF may determine the UPF to which the UE is connected, using the information. The AMF, the SMF, and/or the UPF may be determined in a procedure for the registration in the NW, a procedure for establishing the PDU session, or a procedure for the service request. This can, for example, reduce the possibility of changes in the AMF, the SMF, and/or the UPF after the AMF, the SMF, and/or the UPF is determined. This can reduce the amount of signaling due to creation of a procedure in the communication system.

As another example on determination of the AMF, the SMF, and/or the UPF, the AMF, the SMF, and/or the UPF to be a default connection destination of the UE may exist. For example, the UE, the base station, the AMF, or the SMF may have information on the default connection destination. For example, the base station may have the AMF to be the default connection destination, the AMF may have the SMF to be the default connection destination, and the SMF may have the UPF to be the default connection destination. Each of the devices may redetermine the AMF, the SMF, and/or the UPF to which the UE is connected, using the information on redundant paths. This can, for example, avoid the complexity in the communication system.

As another example of the information on redundant paths, an NW device may derive the information on the redundant path. Examples of the NW device may include the base station, the AMF, the SMF, and the UDM. For example, the AMF may notify the calculated information to the base station or the SMF. As another example, the UDM may notify the calculated information to the AMF or the SMF. The AMF may notify the information calculated by the UDM to the base station or the SMF. This can, for example, reduce the amount of signaling between the UE and the base station.

As another example, notifying the information on redundant paths from the UE and deriving the information by the NW device may be used in combination. For example, the UE may notify the NW device of the information (1) to (8) disclosed as the example information on redundant paths, or the combinations. The information (8) to be notified from the UE to the NW device may be, for example, (8-1) and/or (8-2). The NW device may calculate (8) to (16) disclosed as the example information on redundant paths or the combinations, using the information from the UE. The information (8) to be calculated by the NW device may be, for example, (8-3) and/or (8-4). This can, for example, reduce the amount of signaling between the UE and the base station, and reduce the amount of processing in the NW device.

The base station may obtain information on another redundant path. The information to be obtained by the base station may be, for example, (8) to (16) disclosed as the example information on redundant paths or the combinations. The base station may switch between the base stations in its own redundant path to which the UE is connected, or select a handover target base station of the UE, using the information, for example, information on the base station to be used in another redundant path. For example, when determining a handover destination of the UE in its own redundant path, the base station may exclude a base station being used in another redundant path as the handover destination. This, for example, enables connection of the UEs in a plurality of redundant paths to different base stations, and can consequently increase the robustness of the redundant paths.

The base station may request the information from the AMF. The base station may, for example, make this request based on the fact that the information (1) disclosed as the example information on redundant paths is correct. The base station may include, in the request, a part of the information on redundant paths, for example, (1) to (8) disclosed as the example information on redundant paths or the combinations. The AMF may calculate the information, upon receipt of the request. The AMF may notify the base station of the information, using the request as a trigger. This can, for example, reduce the amount of processing for deriving the information by the base station.

The AMF may request the information from the UDM. The AMF may, for example, make this request based on the fact that the information (1) disclosed as the example information on redundant paths is correct. The AMF may include, in the request, a part of the information on redundant paths, for example, (8-1) and/or (8-2) disclosed as the example information on redundant paths. The UDM may calculate the information on redundant paths, using the information from the AMF. For example, the UDM may calculate information on the AMF to be connected in another redundant path, e.g., an identifier of the AMF, using information (8-1) and/or (8-2) notified from the AMF. The UDM may notify the AMF of the calculated information. The AMF may request information on another redundant path from the AMF in the other redundant path, using the information. Upon receipt of the request, the AMF in the other redundant path may calculate information on its own redundant path to which the AMF is connected, for example, a base station using the redundant path. The AMF in the other redundant path may notify the requesting AMF of the calculated information. The AMF may notify the base station of the notified information. This enables, for example, the NW device in its own redundant path to obtain information on another redundant path even when the AMF to be used in the other redundant path is different from its own AMF.

The base station may request the information when the UE is registered in the NW. For example, the base station may request the information, using reception of the registration request signaling from the UE as a trigger. The base station may include the request in the registration request signaling to be transmitted from its own base station to the AMF. The AMF may request the information when the UE is registered in the NW. For example, the AMF may request the information, using reception of the registration request signaling from the base station as a trigger.

As another example, the base station may request the information when the UE makes a service request. For example, the base station may request the information, using reception of the service request signaling from the UE as a trigger. The AMF may request the information when the UE is registered in the NW. The base station may include the request in the service request signaling to be transmitted from its own base station to the AMF. The AMF may request the information when the UE makes a service request. For example, the AMF may request the information, using reception of the service request signaling from the base station as a trigger.

As another example, the AMF may request the information when the UE establishes the PDU session. For example, the AMF may request the information, using reception of the PDU session establishment request from the UE as a trigger.

The UE, the base station, the AMF, and/or the SMF may notify the NW device in another redundant path of information on its own redundant path. The information to be notified by the UE, the base station, the AMF, and/or the SMF may be, for example, a part or all of (1) to (17) disclosed as the example information on redundant paths (e.g., (1) to (6), (9) to (12), or the combinations). The AMF or the SMF may notify the information.

The NW device in another redundant path may determine the base station, the UPF, the AMF, and/or the SMF to be connected in its own redundant path or switch between the base stations, the UPFs, the AMFs, and/or the SMFs to be connected in its own redundant path, using the information. For example, the NW device in another redundant path may determine the base station and/or the UPF to be used in its own redundant path, except the base station and/or the UPF included in the information. This, for example, enables connection of the UEs in a plurality of redundant paths to different base stations and/or different UPFs, and can consequently increase the robustness of the redundant paths.

For example, when the UE is handed over, the UE need not be able to be connected to the base station in a redundant path different from that of its own UE. The base station may notify a source base station of the UE of rejection to a handover request from the source base station. The base station may give the notification on the rejection, for example, via the handover preparation failure signaling. The notification on the rejection may include a cause. The cause may include, for example, information indicating that the base station has already been connected to a UE in another redundant path.

As another example, when the UE selects and/or reselects a cell, the UE need not be able to be connected to the base station in a redundant path different from that of its own UE. The base station may notify the UE that the connection with its own base station is impossible, in a random access procedure with the UE. The base station may give the notification using, for example, a random access message 4 or a random access message 2. The notification may include a cause. The cause may include, for example, information indicating that the base station has already been connected to a UE in another redundant path.

As another example of the handover the UE, the base station to which the UE in another redundant path is to be newly connected may instruct another connecting UE of the handover. The base station may issue the instruction to the other connecting UE via the RRC signaling, for example, using the RRC reconfiguration (RRCReconfiguration). The instruction may include a cause. The cause may include, for example, information indicating that the base station has already been connected to a UE in another redundant path.

The base station may determine whether to reject the handover of the UE to its own base station, or instruct the handover of the connecting UE. The base station may make the determination, for example, using the measurement report from each of the UEs. The source base station may notify the base station of the measurement reports of the UEs. The base station may request the measurement reports of the UEs from the source base station. This can, for example, improve the stability of the communication quality in both of the redundant paths.

When establishing the measurement configuration for the UE, the base station may configure base stations or cells that can be connected in its own redundant path as base stations or cells to be measured or as base stations or cells to which the measurement results are to be reported. The base stations or the cells that can be connected in its own redundant path may be, for example, base stations or cells that are not used in the other redundant paths.

This can, for example, prevent reduction in a redundant degree due to an overlap between base stations in a plurality of redundant paths. As another example, the base stations or cells that can be connected in its own redundant path may include a base station or a cell that is used in another redundant path. This enables, for example, a handover even when candidates for a handover target base station in its own redundant path cannot be found except the base station used in another redundant path. This can improve the stability of the communication quality in both of the redundant paths.

As another example of establishing the measurement configuration for the UE by the base station, the base station may exclude base stations or cells that cannot be connected in its own redundant path as the base stations or cells to be measured or as the base stations or cells to which the measurement results are to be reported. This can, for example, reduce the amount of signaling for the measurement configuration when the number of the base stations or cells that can be connected is less. The base stations or cells that cannot be connected in its own redundant path may be, for example, base stations or cells that are used in the other redundant paths.

The UE, the base station, the AMF, and/or the SMF may give the notification to the NW device in another redundant path via a UE host or through the communication between UEs (for example, a sidelink). As another example, the notification may be given through the base station, for example, via the Xn interface. As another example, the notification may be given through the AMF, for example, through the base station, the AMF, and a base station in another redundant path, or via an interface between AMFs. The interface between AMFs may be provided. As another example, the notification may be given through the SMF, for example, via an interface between SMFs.

As another example, the notification may be given from the AMF through the SMF in another redundant path. As another example, the notification may be given through the UPF or the DN. Examples of the notification may include notification of information indicating that communication with the UE in its own path is impossible, notification of information indicating that the communication with the UE in its own path has been recovered, and notification of information on the redundant paths.

The base station may dedicatedly notify or broadcast, to the UE, information on cells or base stations to which the UE cannot be connected (for example, a blacklist of the cells or base stations). The base station may broadcast the information, for example, using system information. The base station may configure information on the cells to which the UE cannot be connected, using the information on the redundant paths notified from another redundant path. The base station may include information on the UE that cannot be connected to the cells, for example, the identifier of the UE, in the information to be notified or broadcast to the UE. The UE may be connected to the base station, using the information. This enables, for example, the UE to promptly understand the cells to which the UE cannot be connected.

The base station may notify or broadcast, to the UE, information on the redundant path including its own base station. The information may be information on the redundant path to which its own base station can be connected. The base station may broadcast the information, for example, using system information. Examples of the information may include information on the reliability group including its own base station (see Non-Patent Document 24 (TS23.501)), information (1) to (17) on the redundant paths including its own base station, and the combinations. The UE may be connected to the base station, using the information. For example, when the base station can be connected in its own redundant path, the UE may be connected to the base station. This enables, for example, the UE to promptly understand the base station to which the UE can be connected.

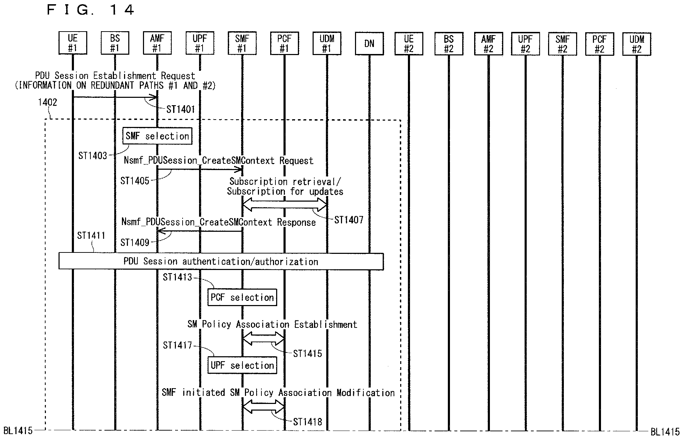

FIGS. 14 to 16 are sequence diagrams illustrating establishment of communication using redundant paths using a plurality of UEs. FIGS. 14 to 16 are connected across locations of borders BL1415 and BL1516. FIGS. 14 to 16 illustrate application of two redundant paths. In one of the redundant paths (may be hereinafter referred to as a redundant path #1), a UE #1, a base station #1, an AMF #1, a UPF #1, and a SMF #1 are used. In the other redundant path (may be hereinafter referred to as a redundant path #2), a UE #2, a base station #2, an AMF #2, a UPF #2, and a SMF #2 are used. The UE #1 and the UE #2 that are different from each other in a terminal host are connected to the base station #1 and the base station #2, respectively, and are used for the communication with a network host. In FIGS. 14 to 16, "BS#1" and "BS#2" denote the base station #1 and the base station #2, respectively. FIGS. 14 to 16 illustrate establishment of a PDU session in the UE #1 and the UE #2.

In Step ST1401 of FIG. 14, the UE #1 requests the AMF #1 to establish a PDU session. The request may include information on the redundant paths using the UE #1 and/or the UE #2.

In a procedure 1402 of FIG. 14, the PDU session is established.

In Step ST1403 of FIG. 14, the AMF #1 selects an SMF. In Step ST1405, the AMF #1 requests the SMF #1 to create a PDU session. In Step ST1407, the SMF #1 inquires of the UDM #1 about subscriber information, and obtains the subscriber information. In Step ST1409, the SMF #1 notifies the AMF #1 of a response to the request for creating the PDU session. In Step ST1411, the PDU session is authenticated/authorized.

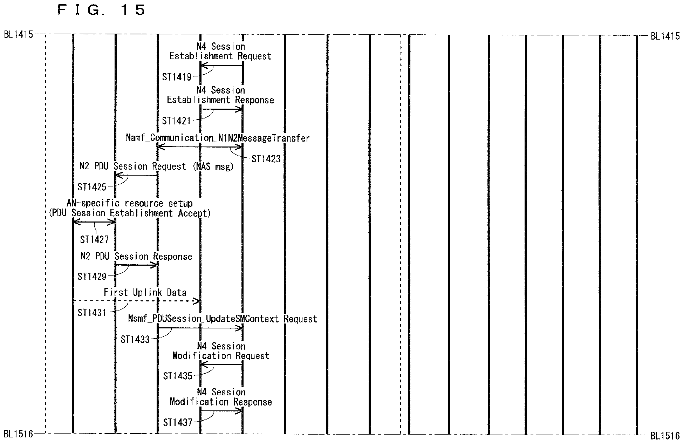

In Step ST1413 of FIG. 14, the SMF #1 selects a PCF to be used for connection with the UE #1. In Step ST1415, the SMF #1 and a PCF #1 establish session management policy association information. In Step ST1417, the SMF #1 selects a UPF to be used for communication with the UE #1. In Step ST1418, the SMF #1 and the PCF #1 may modify the session management policy association information. In Step ST1418, for example, the SMF #1 may transmit, to the PCF #1, information on the IP address assigned to the UE. In Step ST1419 of FIG. 15, the SMF #1 requests the UPF #1 to establish a N4 session. In Step ST1421, the UPF #1 notifies the SMF #1 of a response to the request in Step ST1419.

In Step ST1423 of FIG. 15, a RAN parameter calculated in a core NW is transmitted and received between the SMF #1 and the AMF #1. In Step ST1425, the AMF #1 transmits, to the base station #1, a PDU session request in the N2 interface. The request in Step ST1425 may include the parameter transmitted and received in Step ST1423. In Step ST1427, the base station #1 transmits a request for configuring the RAN to the UE #1. The request may include a response to the request for establishing the PDU session. Step ST1427 may be performed, for example, using the signaling for the RRC reconfiguration (RRCReconfiguration). In Step ST1429, the base station #1 notifies the AMF #1 of a response to the request for the PDU session in the N2 interface.

In Step ST1431 of FIG. 15, the UE #1 transmits the first uplink data to the UPF #1.

In Step ST1433 of FIG. 15, the AMF #1 may request the SMF #1 to update the PDU session. The request may include the session management information received from the base station #1.

In Step ST1435 of FIG. 15, the SMF #1 may request the UPF #1 to modify the N4 session. In Step ST1437, the UPF #1 may respond to the request for modifying the N4 session from the SMF #1.

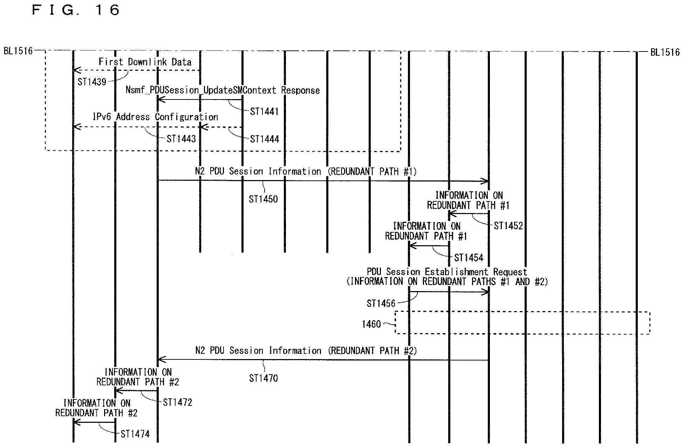

In Step ST1439 of FIG. 16, the UPF #1 transmits the first downlink data to the UE #1.

In Step ST1441 of FIG. 16, the SMF #1 may notify the AMF #1 of a response to the request for updating the PDU session.

In Steps ST1443 and ST1444 of FIG. 16, the SMF #1 notifies the UE #1 of an IPv6 router advertisement through the UPF #1.

In Step ST1450 of FIG. 16, the AMF #1 notifies the AMF #2 of information on the redundant path #1. The notification may be, for example, notification on the PDU session in the redundant path #1. The signaling to be used for the notification may be newly provided. The information may include the information (1) to (17) disclosed as the information on redundant paths. In Step ST1452, the AMF #2 may forward the information to the base station #2. In Step ST1454, the base station #2 may forward the information to the UE #2.

In Step ST1456 of FIG. 16, the UE #2 requests the AMF #2 to establish the PDU session. The request may include information on redundant paths using the UE #1 and/or the UE #2.

In a procedure 1460 of FIG. 16, the same processes as those in the procedure 1402 are performed.

In Step ST1470 of FIG. 16, the AMF #2 notifies the AMF #1 of information on the redundant path #2. The notification may be, for example, identical to that in Step ST1450. The information may include the information (1) to (17) disclosed as the information on redundant paths. In Step ST1472, the AMF #1 may forward the information to the base station #1. In Step ST1474, the base station #1 may forward the information to the UE #1.

Although FIGS. 14 to 16 illustrate a case where the AMF #1 to be used in the redundant path #1 is different from the AMF #2 to be used in the redundant path #2, the same AMF may be used. This can, for example, avoid the complexity in the control over the redundant paths #1 and #2.

Although FIGS. 14 to 16 illustrate a case where the AMF #1 notifies information on the redundant path #1 to the base station #2 via the AMF #2, the AMF #1 may directly notify the information to the base station #2. This enables, for example, prompt notification on the redundant paths.

Although FIGS. 14 to 16 illustrate a case where the AMF #1 notifies the information on the redundant path #1, the base station #1 may notify the information. The base station #1 may notify the information to the AMF #2, to the base station #2 via the AMF #2, or directly to the base station #2. This can, for example, increase the flexibility in the communication system.

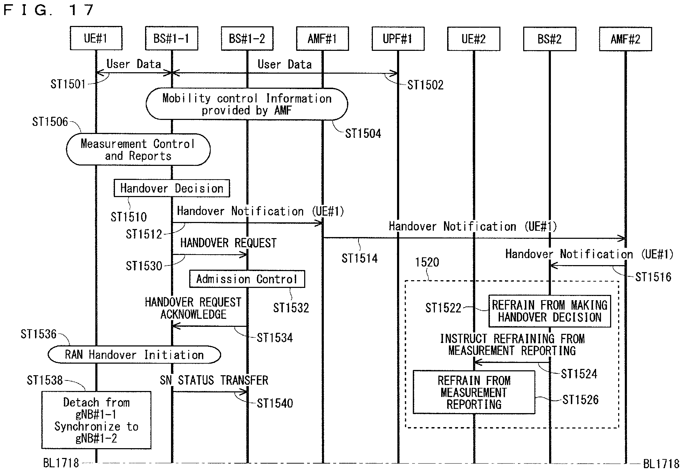

FIGS. 17 to 19 illustrate, when the UE #1 in the redundant path #1 is handed over, operations for restricting the handover of the UE #2 using the redundant path #2 and operations for removing the restriction. FIGS. 17 to 19 are connected across locations of borders BL1718 and BL1819. FIGS. 17 to 19 illustrate the handover of the UE #1 from a base station #1-1 to a base station #1-2. In FIGS. 17 to 19, "BS#1-1", "BS#1-2", and "BS#2" denote the base station #1-1, the base station #1-2, and the base station #2, respectively.

In Steps ST1501 and ST1502 of FIG. 17, user data is transmitted and received between the UPF #1 and the UE #1. Step ST1501 indicates transmission and reception of the data between the UE #1 and the base station #1-1, and Step ST1502 indicates transmission and reception of the data between the base station #1-1 and the UPF #1.

In Step ST1504 of FIG. 17, the AMF #1 notifies the base station #1-1 of mobility control information. In Step ST1506, the base station #1-1 notifies measurement control information to the UE #1. The UE #1 performs the measurement using the control information, and transmits the measurement report to the base station #1-1. In Step ST1510, the base station #1-1 determines to hand over the UE #1 to the base station #1-2.

In Step ST1512 of FIG. 17, the base station #1-1 notifies the AMF #1 that the UE #1 is handed over. The notification may include the information (1) to (17) disclosed in the first embodiment as the information on redundant paths. The base station #1-1 may determine whether the UE #1 communicates using the redundant paths, depending on the presence or absence of the notification in Step ST1512. In Step ST1514, the AMF #1 forwards the information in Step ST1512 to the AMF #2. In Step ST1516, the AMF #2 forwards the information in Step ST1512 to the base station #2.

In a procedure 1520 indicated by the broken line in FIG. 17, the base station #2 refrains from making a handover decision, and the UE #2 refrains from measurement reporting.

In Step ST1522 of FIG. 17, the base station #2 refrains from the handover of the UE #2. The base station #2 may refrain from the handover with Step ST1516. In

Step ST1524, the base station #2 instructs the UE #2 to refrain from measurement reporting. The base station #2 may impose the instruction via the RRC signaling, for example, using the RRC reconfiguration (RRCReconfiguration). In Step ST1526, the UE #2 refrains from measurement reporting.

In Step ST1530 of FIG. 17, the base station #1-1 requests the base station #1-2 to hand over the UE #1. In Step ST1532, the base station #1-2 performs admission control on the UE #1. In Step ST1534, the base station #1-2 transmits, to the base station #1-1, the acknowledgment to the handover request.

In Step ST1536 of FIG. 17, the base station #1-1 initiates the handover of the UE #1. In Step ST1536, the base station #1-1 instructs the UE #1 of the handover. The base station #1-1 may issue the instruction, for example, using the RRC reconfiguration (RRCReconfiguration). Upon receipt of the instruction, the UE #1 releases the connection with a cell in the base station #1-1, and synchronizes with a cell in the base station #1-2 in Step ST1538.

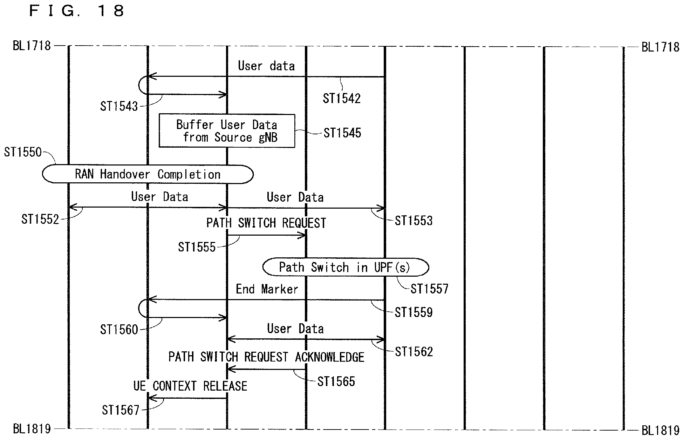

In Step ST1540 of FIG. 17, the base station #1-1 forwards, to the base station #1-2, a status on the sequence number of the packet transmitted and received with the UE #1. In Steps ST1542 and ST1543 of FIG. 18, the base station #1-1 forwards, to the base station #1-2, the user data received from the UPF #1. Step ST1542 indicates transmission of the user data from the UPF #1 to the base station #1-1, and Step ST1543 indicates transmission of the user data from the base station #1-1 to the base station #1-2. In Step ST1545, the base station #1-2 holds the data in Step ST1543.

In Step ST1550 of FIG. 18, the UE #1 notifies the base station #1-2 of the completion of the handover. In Steps ST1552 and ST1553, the UE #1 and the UPF #1 transmit and receive data through the base station #1-2. Step ST1552 indicates transmission of the uplink data and the downlink data held in Step ST1543 between the UE #1 and the base station #1-2, and Step ST1553 indicates transmission of the uplink data from the base station #1-2 to the UPF #1.

In Step ST1555 of FIG. 18, the base station #1-2 requests the AMF #1 to switch between paths. In Step ST1557, the UPF #1 switches the path to the UE #1 from the base station #1-1 to the base station #1-2. In Step ST1559, the UPF #1 transmits the end marker packet to the base station #1-1. In Step ST1560, the base station #1-1 forwards the end marker packet to the base station #1-2. In Step ST1562, the UPF #1 and the base station #1-2 transmit and receive packets after the end marker packet.

In Step ST1565 of FIG. 18, the AMF #1 transmits, to the base station #1-2, the acknowledgment to the request for switching between paths. In Step ST1567, the base station #1-2 instructs the base station #1-1 of the UE context release. Upon receipt of the instruction, the base station #1-1 releases the UE context of the UE #1.

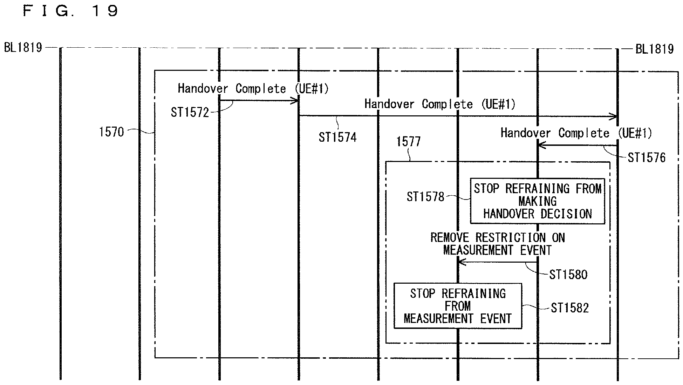

In a procedure 1570 indicated by the alternate long and short dashed lines in FIG. 19, the completion of the handover of the UE #1 is notified, the base station #2 resumes determining the handover, and the UE #2 resumes the measurement reporting.

In Step ST1572 of FIG. 19, the base station #1-2 notifies the AMF #1 of the completion of the handover of the UE #1. In Step ST1574, the AMF #1 notifies the AMF #2 of the completion of the handover of the UE #1. In Step ST1576, the AMF #2 notifies the base station #2 of the completion of the handover of the UE #1.

In a procedure 1577 indicated by the chain double-dashed line in FIG. 19, the base station #2 resumes making a handover decision, and the UE #2 resumes the measurement reporting.

In Step ST1578 of FIG. 19, the base station #2 stops refraining from the handover of the UE #2. The base station #2 may stop refraining from the handover with Step ST1576. In Step ST1580, the base station #2 notifies the UE #2 to stop refraining from the measurement reporting. The base station #2 may give the notification via the RRC signaling, for example, using the RRC reconfiguration (RRCReconfiguration). In Step ST1582, the UE #2 stops refraining from the measurement reporting.

The AMF may determine or arbitrate the base stations and/or the UPFs to which the UEs in a plurality of redundant paths are connected. The base station may request the AMF to determine or arbitrate the base stations to which the UEs in a plurality of redundant paths are connected. Upon receipt of connection requests (for example, the signaling for establishing the RRC) from the UEs in a plurality of redundant paths, the base station may make the request.

Alternatively, while establishing a connection with the UE in a redundant path, the base station may make the request upon receipt of a connection request from the UE in another redundant path. The base station may include, in the request, information on the redundant paths to be used by the UEs. The AMF may make the determination or arbitration using, for example, information of a part or all of (1) to (17) disclosed as the example information on redundant paths (e.g., (5), (8), (9), and/or (13)).

As another example, the SMF may request the AMF to determine or arbitrate the UPFs to which the UEs in a plurality of redundant paths are connected. The SMF may include, in the request, information on the redundant paths to be used by the UEs. The AMF may make the determination or arbitration using, for example, information of a part or all of (1) to (17) disclosed as the example information on redundant paths (e.g., (5), (8), (11), and/or (15)). The AMF may make the determination or arbitration, for example, when the same AMF is used in the plurality of redundant paths. The AMF may prioritize, for example, the UE that has made the connection request to its own AMF earlier.

The AMF may notify the base station of information on the prioritized UE or information on the UE that is not prioritized. Upon receipt of the notification, the base station may establish a connection with the prioritized UE, or reject a connection request from the UE that is not prioritized. Upon receipt of the rejection notification, the UE that is not prioritized may attempt a connection with another base station. As another example, the AMF may notify the SMF of the information on the prioritized UE or the information on the UE that is not prioritized. Upon receipt of the notification, the SMF may determine the UPF to be used by the prioritized UE, or redetermine the UPF to be used by the UE that is not prioritized.

As another example, the base stations to which the UEs in a plurality of redundant paths are connected may be determined by the base stations themselves. The base stations may make the determination using, for example, information of a part or all of (1) to (17) disclosed as the example information on redundant paths (e.g., (5), (8), (9), and/or (13)). The base stations may prioritize, for example, the UEs that are connected to the base stations earlier.

As another example, the SMF may determine the UPFs to which the UEs in a plurality of redundant paths are connected. The SMF may make the determination using, for example, the information of (5), (8), (11), and/or (15) disclosed as the example information on redundant paths. The SMF may make the determination, for example, when the same SMF is used in the plurality of redundant paths.

As another example, the AMF may inquire of another AMF about information on the base stations and/or the UPFs to which the UEs in a plurality of redundant paths are connected. The other AMF may notify the AMF of the information on the base stations, the SMFs, and/or the UPFs to which the UEs in a plurality of redundant paths are connected. Upon receipt of the notification, the AMF may determine the base stations, the SMFs, and/or the UPFs to which the UEs being served thereby are connected.

As another example, the SMF may inquire of another SMF about information on the UPFs to which the UEs in a plurality of redundant paths are connected. The other SMF may notify the SMF of the information on the UPFs to which the UEs in a plurality of redundant paths are connected. Upon receipt of the notification, the SMF may determine the UPFs to which the UEs being served thereby are connected.

As another example, priorities may be assigned to the plurality of redundant paths. Examples of the priorities may include a primary redundant path and a secondary redundant path. The priorities may be statically assigned. For example, the priorities may be stored in the SIM of the UE. As another example, the NW device, for example, the AMF or the base station may determine the priorities.

In handovers in the plurality of redundant paths, the handover started earlier may be prioritized. The base station may notify the base station in another redundant path of information on the handover of the UE. The base station may give the notification through the AMF.

As another example, the handover started earlier may be prioritized in handovers in the plurality of redundant paths. The base station may notify the base station in another redundant path of information on the handover of the UE. The base station may give the notification through the AMF.

As another example, the handover of the UE in the primary redundant path may be prioritized over the handover of the UE in the secondary redundant path.

The notification of the information on the redundant path to a device in another redundant path, which is disclosed in the first embodiment, may be performed using, as a trigger, change in a device in a redundant path, for example, switching between base stations, AMFs, SMFs, and/or UPFs. The base station, the AMF or the SMF may give the notification. For example, information on the device to be used in each redundant path can be shared among the redundant paths. This can consequently prevent decrease in the redundancy due to the use of the same device in a plurality of redundant paths.

The first embodiment enables, during a communication failure in a redundant path, restriction on the handover in another redundant path. This can consequently prevent communication interruptions in all the redundant paths.

### The First Modification of the First Embodiment

After the occurrence of a handover in a redundant path, if another redundant path has an RLF, a beam failure, a communication interruption between a base station and a core network, power-down of each NW device in a NW, and/or a communication interruption between core networks, any of the redundant paths suffer from communication interruptions. This consequently causes a problem of failing to ensure the reliability.

The first modification discloses a method for solving the problem.

The base station that is executing a procedure of a handover cancels the handover.

A base station in a communication-interrupted redundant path notifies a base station in a non-communication-interrupted redundant path of information on the communication interruption. The information may be, for example, the information indicating that communication with the UE in its own path is impossible which is disclosed in the first embodiment. The base station in the communication-interrupted redundant path may notify the base station in the non-communication-interrupted redundant path of information on its own redundant path. The information may be the information (1) to (17) disclosed in the first embodiment as the example information on redundant paths. The base station in the non-communication-interrupted redundant path may be a source base station for the UE to be connected.

The base station in the non-communication-interrupted redundant path determines whether to cancel the handover, using the information from the base station in the communication-interrupted redundant path. The base station notifies the target base station of the cancellation of the handover. In the case where the base station notifies the target base station of a handover request, the base station may notify the cancellation of the handover.

The notification of the cancellation of the handover from the base station to the target base station may include a cause. The cause may be, for example, information on a communication interruption in another redundant path. The target base station may, for example, hold information on the UE subjected to the handover, using the cause. This can, for example, expedite processes when the handover to the target base station is resumed. As another example, the target base station may release the information on the UE subjected to the handover. This can, for example, reduce the memory usage in the target base station.

The base station in the non-communication-interrupted redundant path may refrain from the handover. The base station may instruct the UE to refrain from measurement reporting. Upon receipt of the instruction, the UE may refrain from measurement reporting. The base station and/or the UE may perform the operations, using reception of information on a communication interruption from the base station in the communication-interrupted redundant path as a trigger. The restriction on the handover and the measurement reporting may be identical to those in the first embodiment. This can, for example, reduce the power consumption in the UE and the amount of signaling in the interface between the UE and the base station.

As another example, the UE in the non-communication-interrupted redundant path may continue to transmit the measurement report to the base station. The base station may disregard the measurement report. This can, for example, avoid the complexity in the communication system.

The base station in the communication-interrupted redundant path may notify the base station in the non-communication-interrupted redundant path of information on the recovery from the communication interruption. The base station in the communication-interrupted redundant path may notify the base station in the non-communication-interrupted redundant path of information on its own redundant path. The information may be information of a part or all of (1) to (17) disclosed in the first embodiment as the example information on redundant paths. The base station in the non-communication-interrupted redundant path may be a source base station for the UE to be connected.

The base station in the non-communication-interrupted redundant path may stop refraining from the handover. The base station may instruct the UE to stop refraining from measurement reporting. Upon receipt of the instruction, the UE may stop refraining from the measurement reporting. The base station and/or the UE may perform the operations, using reception of the information on the recovery from the communication interruption from the base station in the communication-interrupted redundant path as a trigger. The removal of the restriction on the handover and the measurement reporting may be identical to those in the first embodiment. This enables, for example, the UE to promptly resume the measurement.

As another example, the base station may resume receiving the measurement report. The resuming process may be applied to, for example, the example case where the base station disregards the measurement report. This can, for example, avoid the complexity in the communication system.

The base station in the non-communication-interrupted redundant path may initiate the handover, using information from the base station in the communication-interrupted redundant path. The base station may select a target base station before the cancellation or a different base station, as a target base station. This enables, for example, the source base station to select a base station with superior communication quality with the UE as the target base station. This can consequently maintain the communication quality between the base station and the UE.

The base station in the non-communication-interrupted redundant path need not cancel the handover of the UE, when the procedure of the handover of the UE goes to a certain step. In other words, the handover of the UE may be continued. This can, for example, avoid the complexity in the communication system.

The certain step may be, for example, a step for the base station to transmit a handover instruction to the UE. This, for example, saves the base station from transmitting the cancellation of the handover to the UE, and can consequently reduce the signaling between the UE and the base station.

As another example, the certain step may be a time point after a lapse of a certain period after the base station transmits the handover instruction to the UE. The certain period may be statically determined in a standard. Alternatively, the base station may determine the certain period, and dedicatedly notify or broadcast the certain period to the UE. The base station may notify the certain period via the RRC signaling.

For example, the base station may include the certain period in the handover instruction to the UE, and notify the certain period. This can, for example, reduce the amount of signaling between the UE and the base station. As another example, the base station may notify the certain period via the MAC signaling. This enables, for example, the base station to promptly notify the certain period. As another example, the base station may notify the period via the L1/L2 signaling. This enables, for example, the base station to more promptly notify the period.

The base station may instruct the UE of the cancellation of the handover. The base station may notify the instruction, for example, before a lapse of the certain period after the base station transmits the handover instruction to the UE. The base station may notify the cancellation instruction via the RRC signaling. This can, for example, enhance the reliability in notifying the cancellation instruction. As another example, the base station may notify the instruction via the MAC signaling. This enables, for example, the base station to promptly notify the instruction. As another example, the base station may notify the instruction via the L1/L2 signaling. This enables, for example, the base station to more promptly notify the instruction.

Upon receipt of the instruction on the handover cancellation, the UE may cancel handover processes for the target base station. The UE may continue the connection with the source base station.

The handover of the UE in the non-communication-interrupted redundant path may be continued. The handover may be continued, for example, after a lapse of the certain period after the base station transmits the handover instruction to the UE. The source base station may forward the downlink data to the target base station.

Until the certain period elapses, the UE may maintain the synchronization with the source base station or receive a synchronization signal from the target base station. The UE may start a connection process with the target base station after the lapse of the certain period. The connection process may be reception of the synchronization signal, or a random access procedure.

The handover instruction from the source base station to the UE may include information on a beam that can be used in the target base station. Examples of the information may include an identifier of the beam, and information on the timing with which the beam is transmitted. The handover instruction may include information on the position of the target base station. The UE may start the connection with the target base station, using the information. This enables, for example, the UE to promptly be connected to the target base station. Consequently, a period during which communication is impossible can be shortened.

The two-step random access may be performed in the connection from the UE to the target base station. The source base station may instruct the target base station to perform the two-step random access procedure. The source base station may instruct the UE to perform the two-step random access procedure. The instruction from the source base station to the UE may be included in, for example, the handover instruction to the UE. Upon receipt of the instruction, the UE may perform the two-step random access with the target base station. This enables, for example, the UE to promptly be connected to the target base station. Consequently, a period during which communication is impossible can be shortened.

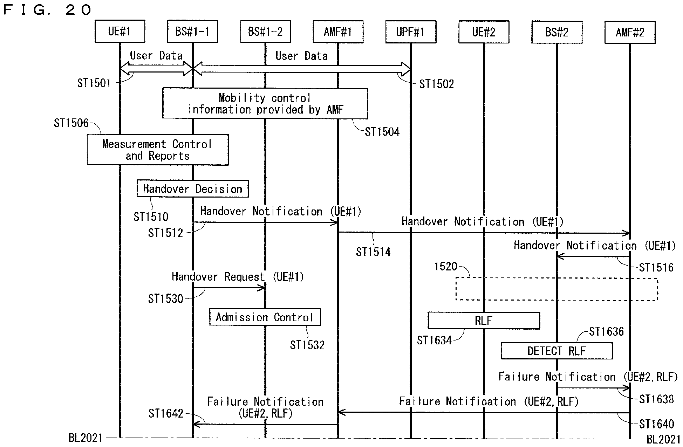

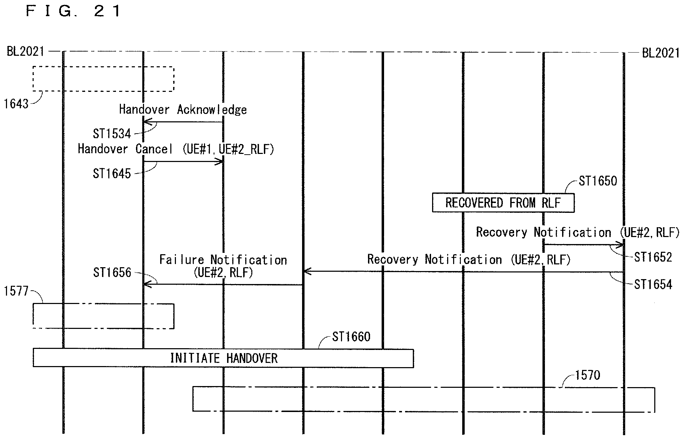

FIGS. 20 and 21 illustrate operations for canceling the handover in the redundant path #1 due to the communication interruption of the UE #2 in the redundant path #2, and operations for initiating the handover in the redundant path #1 due to a recovery from the communication interruption of the UE #2. FIGS. 20 and 21 are connected across a location of a border BL2021. FIGS. 20 to 21 illustrate the handover of the UE #1 from the base station #1-1 to the base station #1-2. In FIGS. 20 and 21, "BS#1-1", "BS#1-2", and "BS#2" denote the base station #1-1, the base station #1-2, and the base station #2, respectively. In FIGS. 20 and 21, the same step numbers are applied to the processes identical to those in FIGS. 17 to 19, and the common description thereof is omitted.

Steps ST1501 to ST1532 in FIG. 20 are identical to those in FIG. 17.

In Step ST1634 of FIG. 20, the UE #2 detects an RLF. In Step ST1636, the base station #2 detects the occurrence of the RLF in the UE #2. The base station #2 may detect the occurrence of the RLF in the UE #2 using, for example, a signal from the UE #2, e.g., a failure in reception of a reference signal.

In Step ST1638 of FIG. 20, the base station #2 notifies the AMF #2 that the UE #2 has the RLF. In Step ST1640, the AMF #2 forwards the notification to the AMF #1. In Step ST1642, the AMF #1 forwards the notification to the base station #1-1. The base station #1-1 determines to cancel the handover of the UE #1 with Step ST1642.

In a procedure 1643 of FIG. 21, the base station #1-1 and the UE #1 perform the same processes as those in the procedure 1520 of FIG. 17.

Steps ST1534 in FIG. 21 is identical to that in FIG. 17. In Step ST1645, the base station #1-1 notifies the base station #1-2 of cancellation of the handover of the UE #1. The notification in Step ST1645 may include information on the RLF of the UE #2.

In Step ST1650 of FIG. 21, the connection between the UE #2 and the base station #2 is recovered. In Step ST1652, the base station #2 notifies the AMF #2 of the recovery of the connection with the UE #2. In Step ST1654, the AMF #2 forwards the notification to the AMF #1. In Step ST1656, the AMF #1 forwards the notification to the base station #1-1.

The procedure 1577 in FIG. 21 is identical to that in FIG. 19. In the procedure1577, the base station #1-1 determines the handover, and the UE #1 resumes the measurement reporting.

In Step ST1660 of FIG. 21, the base station #1-1 initiates the handover of the UE #1 to the base station #1-2. The processes in Step ST1660 may be identical to those in Steps ST1530 to ST1565.

The procedure 1570 in FIG. 21 is identical to that in FIG. 19.

Similarly to the first embodiment, the base station may vary the conditions for starting/stopping the measurement reporting between the UE using a redundant configuration and the UE without using the redundant configuration. For example, moderating the conditions for starting/stopping the measurement reporting by the UE using the redundant configuration more than the conditions for starting/stopping the measurement reporting by the UE without using the redundant configuration enables the handover before the communication quality deteriorates.

This can consequently prevent link blockage in its redundant configuration which is caused by the deteriorating communication quality during restriction of the handover in its redundant configuration. As another example, tightening the conditions for starting/stopping the measurement reporting by the UE using the redundant configuration more than the conditions for starting/stopping the measurement reporting by the UE without using the redundant configuration can reduce the frequency of the handover, and consequently increase the communication efficiency.

The first modification can cancel the handover even when the communication interruption occurs in a redundant path after start of the handover procedure. This can consequently prevent communication interruptions in all the redundant paths.

### The Second Embodiment

In a configuration of redundant paths using one UE, the UE may be connected to a plurality of base stations or one base station.

In a configuration of redundant paths through which one UE is connected to a plurality of base stations, the UE may configure multi-connectivity with the plurality of base stations. The number of the plurality of base stations may be two or three or more. For example, when the UE is connected to two base stations, the UE may configure dual-connectivity (DC) with the two base stations.

In the configuration of redundant paths through which one UE is connected to a plurality of base stations, the base stations may be connected to different UPFs. In the connections between the UE and the UPFs through the base stations, different PDU sessions may be established. The UPFs may be connected to different SMFs or the same SMF. The UPFs may be connected to the same DN or different DNs.

The configuration of redundant paths through which one UE is connected to a plurality of base stations may be made, for example, when the DC is established. The configuration may be made when the UE communicates using the redundant paths. The configuration may be made with the UE capability or through determination of the base station.

The configuration may be made, for example, using the signaling from the master base station for requesting the secondary base station to join as the secondary base station. The configuration may include, for example, a part or all of (1) to (17) disclosed in the first embodiment as the information on redundant paths. This enables, for example, the secondary base station to promptly obtain information on the configuration of the redundant paths, and consequently promptly implement the configuration of the redundant paths.

The master base station or the secondary base station may notify the UE to make the configuration of the redundant paths through which one UE is connected to a plurality of base stations. The notification may include information indicating the use of the redundant paths. The UE may make the configuration of the redundant paths, using the information. This enables, for example, the UE to promptly identify the DC using the redundant paths or the normal DC, and consequently promptly perform processes for establishing the DC.

The configuration of the redundant paths through which one UE is connected to a plurality of base stations may be used for transmitting and receiving small data (Non-Patent Document 9 (TR38.804)). For example, paths through which the UE transmits data to a DN via the master base station, the AMF, the SMF, and the UPF, and paths through which the UE transmits data to the DN via the secondary base station, the master base station, the AMF, the SMF, and the UPF may be provided in the uplink communication.

As another example, paths through which the DN transmits data to the UE via the UPF, the SMF, the AMF, and the master base station, and paths through which the DN transmits data to the UE via the UPF, the SMF, the AMF, the master base station, and the secondary base station may be provided in the downlink communication. This can, for example, enhance the reliability in transmitting and receiving the small data.

However, the following problem occurs. Specifically, the master base station calculates a security key (S-KgNB) of the secondary base station. The handover of the master base station causes switching between the S-KgNBs, and consequently creates a problem of the occurrence of the communication interruption time in both of the master base station and the secondary base station.

The second embodiment discloses a method for solving the problem.

The security key of the secondary base station is not modified before or after the handover of the master base station. The target master base station may use the security key of the secondary base station before the handover as it is. The source master base station may notify the target master base station of information on the security key of the secondary base station. The information may include a value of the security key of the secondary base station, or information indicating that the security key of the secondary base station is maintained. The source master base station may include the information in the signaling for a handover request, and notify the target master base station of the information.

The source master base station may include information indicating that the UE establishes the redundant paths in the signaling for the handover request, and notify the target master base station of the information. The information may be, for example, a part or the entirety of the information on redundant paths disclosed in the first embodiment. For example, the information (2) on redundant paths disclosed in the first embodiment may be information indicating a configuration of redundant paths through which one UE is connected to a plurality of base stations.

The target master base station may understand that the UE establishes the redundant paths, using the information. The target master base station may determine to use the security key of the secondary base station before the handover as it is, using the information. This enables, for example, the target master base station to promptly make the determination, and consequently promptly perform the handover processes of the master base station.

The source master base station may determine whether to notify the target master base station of the information, based on whether the UE communicates using the redundant paths. This can, for example, avoid the complexity in the handover operations for the UE without using any redundant path.

The security key of the secondary base station may be modified after the handover of the master base station. This can, for example, avoid the complexity in managing the security key after the handover.

The secondary base station may notify the modified security key of the secondary base station. This can, for example, increase a communication rate of the user data in the target master base station. As another example, the target master base station may notify the modified security key of the secondary base station. This enables, for example, the use of a base station with superior radio environment immediately after the handover, and consequent enhancement of the reliability of the signaling.

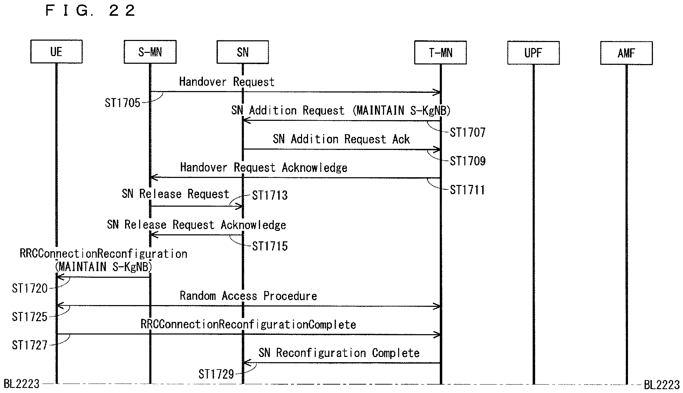

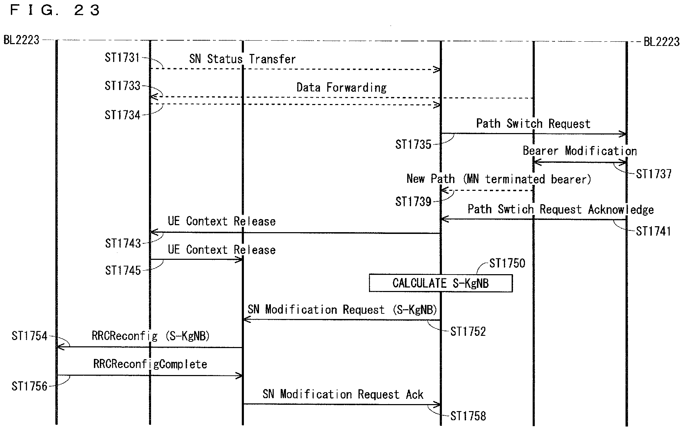

FIGS. 22 and 23 are sequence diagrams illustrating operations of the UE using the redundant paths by the DC for maintaining the security key of the secondary base station before or after the handover of the master base station. FIGS. 22 and 23 are connected across a location of a border BL2223. FIGS. 22 and 23 illustrate an example of switching the master base station from the S-MN to the T-MN without any change in the secondary base station (SN).

In Step ST1705 of FIG. 22, the S-MN notifies the T-MN of a handover request. The S-MN may include, in the notification, information indicating no change in the secondary base station. The S-MN may include, in the notification, information indicating that the security key of the secondary base station is maintained. When the UE communicates using redundant paths, the S-MN may maintain the security key of the secondary base station. Using the information included in the notification of Step ST1705, the T-MN need not change the SN as the secondary base station after the handover, or may maintain the security key of the secondary base station.

In Step ST1707 of FIG. 22, the T-MN requests the SN to join as the secondary base station. The T-MN may include, in the request, the security key of the secondary base station before the handover, or information indicating that the security key of the secondary base station is maintained. In Step ST1709, the SN notifies the T-MN of the acknowledgment to the request for adding the secondary base station. In Step ST1711, the T-MN notifies the S-MN of the acknowledgment to the handover request in Step ST1705.

In Step ST1713 of FIG. 22, the S-MN requests the SN to release the secondary base station. In Step ST1715, the SN notifies the S-MN of the acknowledgment to Step ST1713.

In Step ST1720 of FIG. 22, the S-MN notifies the UE of an instruction for switching the master base station to the T-MN. The S-MN may include, in the notification, information indicating that the security key of the secondary base station is maintained. The UE releases the connection with the S-MN and establishes the downlink synchronization with the T-MN, using the information included in the notification of Step ST1720. The UE maintains the SCG bearer using the information included in the notification of Step ST1720.

In Step ST1725 of FIG. 22, the UE and the T-MN perform the random access procedure to establish the uplink synchronization between the UE and the T-MN. In Step ST1727, the UE notifies the T-MN of the completion of switching the master base station. In Step ST1729, the T-MN notifies the SN of the completion of reconfiguring the secondary base station.

In Step ST1731 of FIG. 23, the S-MN forwards, to the T-MN, a status on the sequence number of the packet transmitted and received with the UE. In Steps ST1733 and ST1734, the S-MN forwards, to the T-MN, the user data received from the UPF. Step ST1733 indicates transmission of the user data from the UPF to the S-MN, and Step ST1734 indicates forwarding of the user data from the S-MN to the T-MN.

In Step ST1735 of FIG. 23, the T-MN notifies the AMF of a request for switching between paths. In Step ST1737, the AMF and the UPF modify a bearer for transmitting and receiving data with the UE. In Step ST1739, the path for the downlink data from the UPF to the master base station is switched from the S-MN to the T-MN. In Step ST1741, the AMF notifies the T-MN of the acknowledgment to Step ST1735.

In Step ST1743 of FIG. 23, the T-MN instructs the S-MN of the UE context release. Upon receipt of the instruction, the S-MN releases the UE context. In Step ST1745, the S-MN instructs the SN of the UE context release on the S-MN. Upon receipt of the instruction, the SN releases the UE context.

The security key of the secondary base station may be modified after the completion of switching the master base station. In Step ST1750 of FIG. 23, the T-MN calculates a new security key of the secondary base station. In Step ST1752, the T-MN notifies the SN of the modified security key of the secondary base station. In Step ST1754, the SN notifies the UE of the modified security key of the secondary base station. The SN may give the notification, for example, using the RRC reconfiguration (RRCReconfiguration). The SN may give the notification, for example, using the signaling bearer (e.g., the SRB3) between the SN and the UE.

In Step ST1756, the UE notifies the SN of the completion of modification of the security key of the secondary base station. The UE may give the notification, for example, using the completion of the RRC reconfiguration (RRCReconfigurationComplete). The UE may give the notification, for example, using the signaling bearer (e.g., the SRB3) between the SN and the UE. In Step ST1758, the SN notifies the T-MN of the acknowledgment to Step ST1752.

Although FIGS. 22 and 23 illustrate an example where the SN notifies the modified security key of the secondary base station, the T-MN may notify the modified security key of the secondary base station. This enables, for example, the signaling to the UE using the T-MN with superior radio environment with the UE immediately after the handover. This can consequently enhance the reliability of the signaling.

Another solution is disclosed. The security key of the secondary base station is modified prior to the handover of the master base station. The target master base station may calculate a modified security key of the secondary base station.

The target master base station may notify the secondary base station of the modified security key of the secondary base station. The notification may be included in, for example, the request for adding the secondary base station (SN Addition Request) from the target master base station to the secondary base station.

The secondary master base station may notify the UE of the modified security key of its own base station. The notification from the secondary base station to the UE may be included in, for example, the RRC reconfiguration (RRCReconfiguration). The secondary master base station may give the notification to the UE, using the request for adding the secondary base station (SN Addition Request) from the target master base station as a trigger.

The RRC reconfiguration signaling may include information on a cause. Information on the cause may be information for switching between master base stations, for example, modification of the security key of the secondary base station prior to the switching between master base stations. This, for example, enables the UE to understand the switching between master base stations, and consequently enables smooth execution of the handover processes in the communication system.

As another example, the source master base station may notify the UE of the modified security key of the secondary base station. The target master base station may notify the source master base station of the modified security key of the secondary base station. This can, for example, increase a communication rate of the user data between the secondary base station and the UE.

Upon receipt of the notification, the UE may modify the security key of the secondary base station. The UE may notify the secondary base station of the completion of modification of the security key. The notification from the UE may be included in, for example, the completion of the RRC reconfiguration (RRCReconfigurationComplete). As another example, the UE may notify the source master base station of the completion of modification of the security key.

The secondary base station may notify the target master base station of the completion of modification of the security key in the UE. The notification may be included in, for example, the signaling for acknowledging the request for adding the secondary base station (SN Addition Request Acknowledgement). Using reception of the notification as a trigger, the target master base station may notify the source master base station of the handover request acknowledgement. The source master base station may release the secondary base station, using reception of the notification as a trigger. The source master base station may instruct the UE of the handover, using the release of the secondary base station as a trigger.

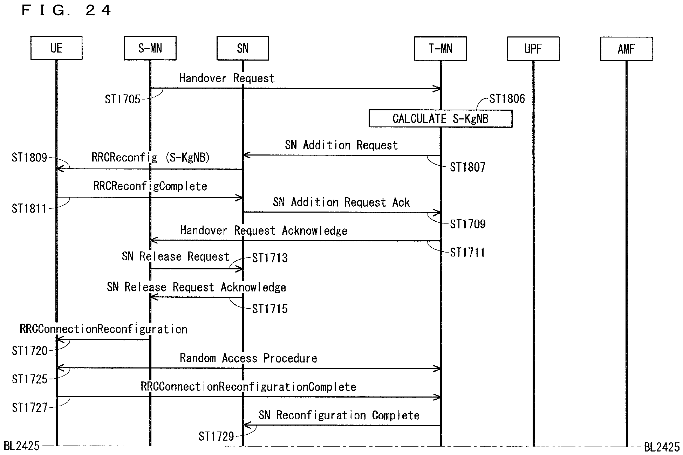

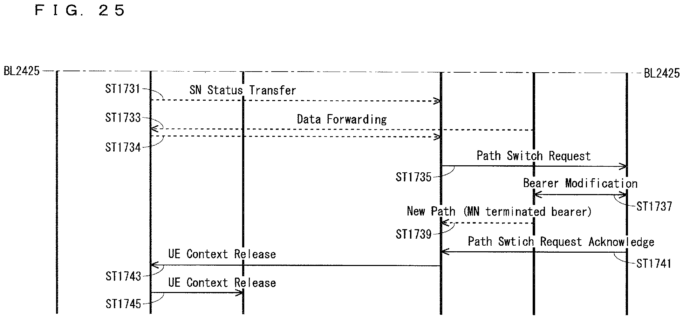

FIGS. 24 and 25 illustrate operations of the UE using the redundant paths by the DC for modifying the security key of the secondary base station prior to the handover of the master base station. FIGS. 24 and 25 are connected across a location of a border BL2425. FIGS. 24 and 25 illustrate an example of switching the master base station from the S-MN to the T-MN without any change in the secondary base station (SN). In FIGS. 24 and 25, the same step numbers are applied to the processes identical to those in FIGS. 22 and 23, and the common description thereof is omitted.

Step ST1705 in FIG. 24 is identical to that in FIG. 22.

In Step ST1806 of FIG. 24, the T-MN calculates a security key of the secondary base station. In Step ST1807, the T-MN requests the SN to join as the secondary base station. The T-MN includes the security key calculated in Step ST1806 in the request, and notifies the request.

Steps ST1809 and ST1811 in FIG. 24 are processes identical to those in Steps ST1754 and ST1756 in FIG. 23, respectively.

Step ST1709 in FIG. 24 to Step ST1745 in FIG. 25 are identical to those in FIGS. 22 and 23.

Although FIGS. 24 and 25 illustrate an example where the SN notifies the modified security key of the secondary base station, the S-MN may notify the modified security key of the secondary base station. This can, for example, increase a communication rate of the user data in the SN.

Whether to modify the security key of the secondary base station before or after the handover may be switchable. For example, the source master base station may determine the switching. The source master base station may make the determination using, for example, the communication quality between its own base station and the UE (e.g., radio quality). For example, when the radio quality with the UE rapidly deteriorates, the source master base station may determine to modify the security key of the secondary base station after the handover.

As another example, when the deterioration of the radio quality with the UE is moderate, the source master base station may determine to modify the security key of the secondary base station before the handover. This can, for example, expedite the handover when the radio quality rapidly deteriorates, and consequently maintain the communication quality between the UE and the base station.

The source master base station may notify the target master base station of the determination result. The notification may be included in, for example, the signaling for the handover request from the source master base station to the target master base station. Upon receipt of the notification, the target master base station may determine the timing to calculate the security key of the secondary base station. The target master base station may calculate the security key with the timing. This can, example, increase the efficiency of the processing for calculating the security key of the secondary base station by the target master base station.

As another example, the target master base station may determine the switching. The target master base station may make the determination using, for example, the security key of the secondary base station calculated by the source master base station. For example, when the security key of the secondary base station calculated by the source master base station is being used by any UE connected to the target master base station, the target master base station may determine to modify the security key of the secondary base station before the handover.

As another example, when the security key of the secondary base station calculated by the source master base station is not used by any UE connected to the target master base station, the target master base station may determine to modify the security key of the secondary base station after the handover. This can, for example, prevent an overlap in the security key between the UEs, and consequently reduce the possibility of incorrectly receiving the security key in each of the UEs.

The source master base station may notify the target master base station of the security key. The notification may be included in, for example, the signaling for the handover request from the source master base station to the target master base station.

The operations disclosed in the second embodiment may be applied to the UE using the redundant paths. The master base station may determine whether to maintain the security key in the UE, using (1) to (17) disclosed in the first embodiment as the information on redundant paths. This enables, for example, the continued use of the conventional UEs in the communication system, and consequent avoidance of the complexity in the communication system.

The second embodiment can prevent a communication interruption between the secondary base station and the UE during the handover of the master base station. This can consequently enhance the reliability.

### The First Modification of the Second Embodiment

The connection with the secondary base station is released when an MCG failure occurs. This causes a problem in a breakdown of communications between the UE and the NW device.

The first modification discloses a method for solving the problem.

Transmission and reception of data to and from the SN in an MCG failure are enabled. During communication using redundant paths, the transmission and reception of data to and from the SN in an MCG failure may be enabled. The transmission and reception of data only to and from the SN in an MCG failure may be enabled. The transmission and reception of data to and from the SN may be, for example, transmission and reception of data using the SCG bearer.

The configuration for enabling the transmission and reception of data to and from the SN in an MCG failure may be made, for example, when the DC is established. The configuration may be made when the UE communicates using redundant paths. The configuration may be made with the UE capability or through determination of the base station.

The UE may notify the secondary base station of information on the MCG failure. The secondary base station may forward the information to the master base station. The master base station may perform, using the information, operations for recovering the connection with the UE, for example, transmitting a reference signal to the UE. This enables, for example, the UE to be promptly recovered from the MCG failure.

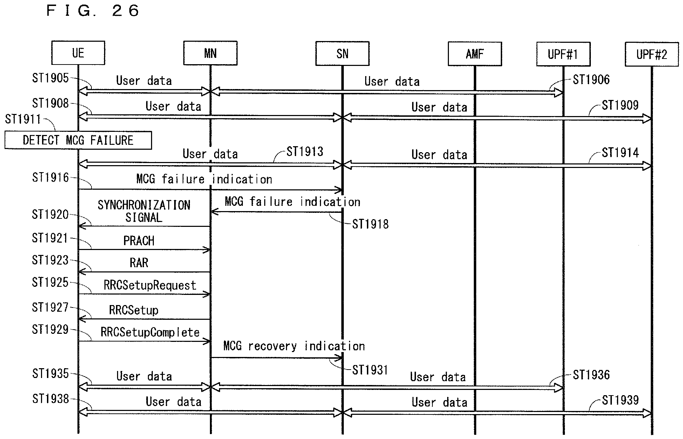

FIG. 26 is a sequence diagram illustrating the first example of operations for continuing the communication with the secondary base station after an MCG failure. In FIG. 26, the UE communicates using a path that passes through the MN and the UPF #1, and a path that passes through the SN and the UPF #2. FIG. 26 illustrates an example when the UE resumes the connection with the same MN after the MCG failure.

In Steps ST1905 and ST1906 of FIG. 26, user data is transmitted and received between the UE and the UPF #1. Step ST1905 indicates transmission and reception of the user data between the UE and the MN, and Step ST1906 indicates transmission and reception of the user data between the MN and the UPF #1. In Steps ST1908 and ST1909, the user data is transmitted and received between the UE and the UPF #2. Step ST1908 indicates transmission and reception of the user data between the UE and the SN, and Step ST1909 indicates transmission and reception of the user data between the SN and the UPF #2.

In Step ST1911 of FIG. 26, the UE detects the MCG failure. In Steps ST1913 and ST1914, the UE maintains the communication with the UPF #2 through the SN. Steps ST1913 and ST1914 are identical to Steps ST1908 and ST1909, respectively.

In Step ST1916 of FIG. 26, the UE may notify the SN of the occurrence of the MCG failure. The UE may give the notification, for example, via the RRC signaling. The UE may give the notification, for example, using the signaling bearer (e.g., the SRB3) between the SN and the UE. In Step ST1918, the SN may notify the MN of the occurrence of the MCG failure in the UE. In Step ST1920, the MN transmits a synchronization signal to the UE. The MN may execute Step ST1920 using the reception of Step ST1918 as a trigger.

In Step ST1921 of FIG. 26, the UE transmits the PRACH to the MN. In Step ST1923, the MN transmits a random access response (RAR) to the UE.

In Step ST1925 of FIG. 26, the UE requests the MN to set up the RRC. The UE may make the request via the RRC signaling, for example, using the RRC setup request (RRCSetupRequest) in Non-Patent Document 22 (TS38.331). In Step ST1927, the MN instructs the UE to set up the RRC. The MN may issue the instruction via the RRC signaling, for example, using the RRC setup (RRCSetup) in Non-Patent Document 22 (TS38.331).

In Step ST1929 of FIG. 26, the UE notifies the MN of the completion of setting up the RRC. The UE may give the notification via the RRC signaling, for example, using the RRC setup completion (RRCSetupComplete) in Non-Patent Document 22 (TS38.331).

In Step ST1931 of FIG. 26, the MN notifies the SN of the recovery of the UE from the MCG failure. In Steps ST1935 and ST1936, the user data is transmitted and received between the UE and the UPF #1. Steps ST1935 and ST1936 are identical to Steps ST1905 and ST1906, respectively. In Steps ST1938 and ST1939, the user data is transmitted and received between the UE and the UPF #2. Steps ST1938 and ST1939 are identical to Steps ST1908 and ST1909, respectively.

The UE after detecting the MCG failure may be reconnected to a master base station different from the master base station at the detection.

The UE may exclude the secondary base station from candidates for the master base station to be reconnected. This can, for example, maintain the redundancy in the redundant paths.

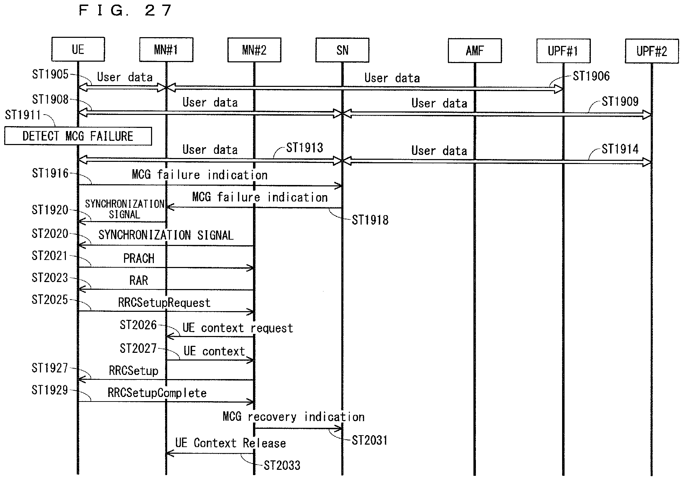

FIG. 27 is a sequence diagram illustrating the second example of operations for continuing the communication with the secondary base station after an MCG failure. In FIG. 27, the UE communicates using a path that passes through the MN #1 and the UPF #1, and a path that passes through the SN and the UPF #2. FIG. 27 illustrates an example when the UE resumes the connection with the MN #2 after the MCG failure. In FIG. 27, the same step numbers are applied to the processes identical those in FIG. 26, and the common description thereof is omitted.

Steps ST1905 to ST1920 in FIG. 27 are identical to those in FIG. 26.

In Step ST2020 of FIG. 27, the MN #2 transmits a synchronization signal to the UE. In the example of FIG. 27, the UE determines to be reconnected to the MN #2 using the reception results of Steps ST1920 and ST2020.

In Steps ST2021 to ST2025 of FIG. 27, the UE and the MN #2 perform the same operations as those in Steps ST1921 to ST1925 of FIG. 26. The request for setting up the RRC in Step ST2025 may include information on the MCG failure. The information may include, for example, information indicating the recovery from the MCG failure or information on the base station having the MCG failure.

In Step ST2026 of FIG. 27, the MN #2 requests the UE context from the MN #1. The MN #2 may request the UE context from the MN #1, using the information on the MCG failure included in the RRC setup request in Step ST2025. In Step ST2027, the MN #1 notifies the MN #2 of the UE context.

In Steps ST1927 and ST1929 of FIG. 27, the UE and the MN #2 perform the same operations as those in Steps ST1927 and ST1929 of FIG. 26. In Step ST2031 of FIG. 27, the MN #2 and the SN perform the same operation as that in Step ST1931 of FIG. 26.

In Step ST2033 of FIG. 27, the MN #2 requests the MN #1 to release the UE context. Upon receipt of the request in Step ST2033, the MN #1 releases the UE context.

When transmission and reception of data to and from the SCG in an MCG failure are enabled, the UE may maintain RRC_CONNECTED as the RRC state. As another example, the UE may transition to RRC_INACTIVE or RRC_IDLE as the RRC state.

The operations disclosed in the first modification may be applied to the UE using the redundant paths. For example, the secondary base station may determine whether to continue the communication with the UE after detecting the MCG failure, using (1) to (17) disclosed in the first embodiment as the information on redundant paths. This enables, for example, the continued use of the conventional UEs in the communication system, and consequent avoidance of the complexity in the communication system.

The methods disclosed in the first modification may be applied to power-down of each NW device in the master base station side, a communication interruption between the master base station and the core network (for example, the UPF), and/or a communication interruption in the core network (for example, between the UPF and the SMF). This, for example, produces the same advantages as previously described.

The first modification enables transmission and reception of data using the secondary base station even in an MCG failure, and consequent maintenance of the TSC.

### The Third Embodiment

In a configuration of redundant paths through which one UE is connected to one base station, the base station may be connected to one UPF or a plurality of UPFs. In the configuration of redundant paths, the number of PDU sessions may be one. The PDU session may include a plurality of N3 tunnels.

The configuration of redundant paths through which one UE is connected to one base station may be used for transmitting and receiving small data (Non-Patent Document 9 (TR38.804)). For example, a plurality of N2 interfaces, a plurality of N11 interfaces, a plurality of N4 interfaces, and/or a plurality of N9 interfaces may be used in the paths through which the UE transmits data to the DN via the base station, the AMF, the SMF, and the UPF in the uplink communication. The plurality of N9 interfaces may be used, for example, when the paths to the DN include a plurality of UPFs. This can, for example, enhance the reliability in transmitting and receiving the small data.

Furthermore, the configuration of redundant paths through which each of UEs is connected to different base stations which is disclosed in the first embodiment, the configuration of redundant paths through which one UE is connected to a plurality of base stations which is disclosed in the second embodiment may be used.

However, the following problem occurs. Specifically, the current geometry of redundant paths may have difficulty in maintaining the reliability and/or the TSC, depending on a propagation state or change in a NW load state. However, none discloses how to switch the geometry of redundant paths. This consequently causes problems of a failure in switching the geometry of redundant paths and a failure in maintaining the reliability and/or the TSC.

The third embodiment discloses a method for solving the problems.

The configuration of redundant paths through which one UE is connected to one base station can be switched to the configuration of redundant paths through which one UE is connected to a plurality of base stations. The switching may be performed using addition of the secondary base station (SN Addition), the PDU session establishment, and the PDU session modification. For example, addition of the secondary base station (SN Addition), the PDU session establishment, and the PDU session modification may be performed in this order in a procedure for switching the configuration of redundant paths. Alternatively, the PDU session establishment and the PDU session modification may be performed simultaneously after addition of the secondary base station. Alternatively, addition of the secondary base station, the PDU session establishment, and the PDU session modification may be simultaneously performed.

The base station may determine to switch the configuration of redundant paths. The base station may determine to switch the configuration of redundant paths, using a measurement report from the UE, information on the QoS of the communication between the base station and the UPF, and/or information on the QoS of backhaul communication between base stations. The information on the QoS of the communication between the base station and the UPF may include, for example, information on a transmission rate, information on the latency, or information on a packet loss rate.

The information on the QoS of the backhaul communication between base stations may include, for example, information on a communication medium (e.g., wired, wireless), or information similar to the information on the QoS of the communication between the base station and the UPF. The base station determines to switch the configuration of redundant paths. This enables, for example, switching the configuration of redundant paths with prompt reflection of fluctuations in the communication environment between the UE and the base station and/or between the base station and the UPF.

The base station may obtain information on the QoS of the communication between its own base station and the UPF. The base station may obtain the information, for example, through monitoring the communication between its own base station and the UPF. The base station may obtain information on the QoS of the backhaul communication between base stations. The base station may obtain the information, for example, through monitoring the backhaul communication between its own base station and another base station. The base station may determine to switch the configuration of redundant paths, using the obtained information. This can, for example, reduce the amount of signaling required for notifying the information.

The base station may notify the AMF of information on switching the configuration of redundant paths. The AMF may notify the SMF of the information. The base station may include, in the information, information on a cause of switching the configuration of redundant paths. Examples of the cause may include a cause on the QoS of a wireless communication path (e.g., a communication path between the UE and the base station), a cause on the QoS of a wired communication path (e.g., a communication path between the base station and the UPF), and a cause on the QoS of the backhaul between base stations.

The SMF may determine the UPF to be added according to switching of the configuration of redundant paths, using the information. This can, for example, maintain the QoS in the communication system after the configuration of redundant paths is switched.

As another example, the AMF may determine to switch the configuration of redundant paths. The AMF may determine to switch the configuration of redundant paths, using information similar to that for the determination by the base station. The AMF may request the information from the base station. The base station may notify the AMF of the information. The AMF may notify the base station of information on switching the configuration of redundant paths.

The base station may perform operations for adding the secondary base station of the UE, using the information. The AMF may notify the SMF of the information. The SMF may determine the UPF to be added according to switching of the configuration of redundant paths, using the information. Determination of switching the configuration of redundant paths by the AMF can, for example, facilitate the control in the communication system.

As another example, the SMF may determine to switch the configuration of redundant paths. The SMF may determine to switch the configuration of redundant paths, using information similar to that for the determination by the base station. The SMF may request the information from the base station through the AMF. The base station may notify the SMF of the information through the AMF. The SMF may notify the AMF of information on switching the configuration of redundant paths. The AMF may notify the base station of the information. The base station may perform operations for adding the secondary base station of the UE, using the information. The SMF may determine the UPF to be added according to switching of the configuration of redundant paths, using the information. The SMF determines to switch the configuration of redundant paths, so that, for example, the UPF to be used in the redundant paths can be promptly determined. Consequently, the configuration of redundant paths can be promptly switched.

New signaling to be used for notifying the information on the QoS of the communication between the base station and the UPF may be provided. Examples of the signaling may include signaling over the N3 interface, signaling over the N4 interface, signaling to be notified between the base station and the SMF through the AMF, signaling to be notified between the UPF and the base station through the SMF and the AMF, signaling to be notified between the UPF and the AMF through the SMF, signaling to be notified between the UPF and the AMF through the base station, and signaling to be notified between the UPF and the SMF through the base station and the AMF. This can, for example, avoid the complexity of notification of the information in designing the communication system.

The UPF may obtain the information on the QoS of the communication between the base station and the UPF. The UPF may obtain the information, for example, through monitoring the communication between the base station and its own UPF. The UPF may notify the obtained information to the base station, the AMF, or the SMF. The UPF may notify the base station of the information, for example, directly via the N3 interface or through the SMF and the AMF. The UPF may notify the AMF of the information through the SMF or the base station. The UPF may notify the SMF of the information directly via the N4 interface or through the base station and the AMF. This, for example, saves the base station from obtaining the information. Consequently, the amount of processing in the base station can be reduced.

The secondary base station may be added in switching the configuration of redundant paths. The secondary base station may be added using, for example, the procedure disclosed in 10.2.2 of Non-Patent Document 12 (TS37.340). The base station before switching the configuration of redundant paths may be the master base station after change. The request for adding the secondary base station which is notified from the base station to the secondary base station may include information indicating a cause.

Examples of the cause may include modification in the redundant configuration, and a cause of modifying the redundant configuration (e.g., maintaining the QoS in a wireless section and/or maintaining the QoS in a wired section). Upon receipt of the notification, the secondary base station may configure the SCG bearer with the UE. This enables, for example, prompt switching of the configuration of redundant paths in the communication system.

The secondary base station to be added may be, for example, a base station in the same reliability group as the master base station. This enables, for example, prompt switching of the configuration of redundant paths. As another example, the secondary base station to be added may be a base station in a reliability group different from that of the master base station. This can, for example, improve the flexibility in switching the configuration of redundant paths.

The base station may notify the UE of information on switching the configuration of redundant paths. The information may be included in, for example, the instruction for adding the secondary base station which is notified from the base station to the UE, and then notified. The information may be included as, for example, a cause for the instruction. The base station may issue the instruction to the UE via the RRC signaling, for example, using the RRC reconfiguration (RRCReconfiguration).

The information may include information on a cause of switching the configuration of redundant paths. The information on the cause of switching the configuration of redundant paths may be, for example, maintaining the QoS in a wireless section and/or maintaining the QoS in a wired section. The UE may request the AMF to add a PDU session, using the information on switching the configuration of redundant paths. This enables, for example, prompt execution of the procedure for switching the configuration of redundant paths.

In switching the configuration of redundant paths, a PDU session may be established. The PDU session may be established using, for example, the procedure disclosed in 4.3.2.2.1 of Non-Patent Document 25 (TS23.502). The PDU session to be newly established may be, for example, a PDU session that passes through the secondary base station.

The base station may request the UE to initiate the procedure for establishing the PDU session. The base station may make the request, for example, via the RRC signaling. The RRC signaling to be used for the request may be, for example, the RRC signaling identical to or different from that for the base station to instruct the UE to add the secondary base station. Upon receipt of the request, the UE may request the AMF to establish a PDU session. This enables, for example, prompt switching of the configuration of redundant paths in the communication system.

As another example, the AMF may initiate the procedure for establishing the PDU session. The AMF may initiate the procedure for establishing the PDU session, for example, without any request from the UE to establish the PDU session which is disclosed in 4.3.2.2.1 of Non-Patent Document 25 (TS23.502). The AMF may initiate the procedure for establishing the PDU session, using the completion of the procedure of adding the secondary base station. This enables, for example, prompt switching of the configuration of redundant paths in the communication system.

In switching the configuration of redundant paths, the PDU session may be modified. The PDU session may be modified using, for example, the procedure disclosed in 4.3.3.2 of Non-Patent Document 25 (TS23.502). The PDU session modification may be, for example, operations for releasing information on a N3 tunnel and/or the QoS flow which passes through the PDU session provided in the secondary base station side, from the PDU session provided in the master base station side.

The third embodiment can maintain the reliability and/or the TSC even when a propagation state or a NW load state is changed.

### The First Modification of the Third Embodiment

The third embodiment discloses switching the configuration of redundant paths through which one UE is connected to one base station to the configuration of redundant paths through which one UE is connected to a plurality of base stations. This first modification discloses switching the configuration of redundant paths through which one UE is connected to a plurality of base stations to the configuration of redundant paths through which one UE is connected to one base station.

The configuration of redundant paths through which one UE is connected to a plurality of base stations may be switched to the configuration of redundant paths through which one UE is connected to one base station using PDU session modification, PDU session release, and release of the secondary base station (SN Release). For example, the PDU session modification, the PDU session release, and the release of the secondary base station may be performed in this order in the procedure for switching configuration of the redundant paths.

Alternatively, the secondary base station may be released after the PDU session modification and the PDU session release are simultaneously performed. Alternatively, the PDU session and the secondary base station may be simultaneously released after the PDU session modification. Alternatively, the PDU session modification, the PDU session release, and the release of the secondary base station may be simultaneously performed.

Similarly to the third embodiment, the base station, the AMF, or the SMF may determine to switch the configuration of redundant paths. The determination may be made, using a measurement report from the UE, information on the QoS of the communication between the base station and the UPF, and/or information on the QoS of the backhaul communication between base stations. The information may be the same as that in the third embodiment. Similarly to the third embodiment, the base station may obtain the information, and notify the AMF of the information. The information on switching the configuration of redundant paths may be notified similarly to the third embodiment.

In switching the configuration of redundant paths, the PDU session may be modified. The PDU session may be modified using, for example, the procedure disclosed in 4.3.3.2 of Non-Patent Document 25 (TS23.502). The PDU session modification may be, for example, operations for adding the information on the N3 tunnel and/or the QoS flow which passes through the PDU session provided in the secondary base station side, to the PDU session provided in the master base station side.

The base station may notify the AMF of a request for modifying the PDU session. The AMF may notify the SMF of the request for modifying the PDU session. The notification may include information indicating a cause. Examples of the cause may include modification in the redundant configuration, and a cause of modifying the redundant configuration (e.g., maintaining the QoS in a wireless section and/or maintaining the QoS in a wired section). Upon receipt of the notification, the SMF may perform operations for releasing the PDU session, for example, preparing the PDU session release. This enables, for example, prompt switching of the configuration of redundant paths in the communication system.

In switching the configuration of redundant paths, the PDU session may be released. The PDU session may be released using, for example, the procedure disclosed in 4.3.4.2 of Non-Patent Document 25 (TS23.502). The PDU session to be released may be, for example, a PDU session that passes through the secondary base station.

The secondary base station may be released in switching the configuration of redundant paths. The secondary base station may be released using, for example, the procedure disclosed in 10.4.2 of Non-Patent Document 12 (TS37.340).

The base station may notify the UE of information on switching the configuration of redundant paths. The information may be included in, for example, the instruction for releasing the secondary base station which is notified from the base station to the UE, and then notified. The information may be included as, for example, a cause for the instruction.

The base station may issue the instruction to the UE via the RRC signaling, for example, using the RRC reconfiguration (RRCReconfiguration). The information may include information on a cause of switching the configuration of redundant paths. The information on the cause of switching the configuration of redundant paths may be, for example, maintaining the QoS in a wireless section and/or maintaining the QoS in a wired section. Using the information on switching the configuration of redundant paths, the UE may release the secondary base station or modify the bearer configuration (for example, configuration modification from the SCG bearer to a bearer that passes through the base station after the configuration of redundant paths is switched). This enables, for example, prompt execution of the procedure for switching the configuration of redundant paths.

The methods disclosed in the first modification may be applied to the power-down of each NW device in the secondary base station side, a communication interruption between the secondary base station and the core network (for example, the UPF), and/or a communication interruption in the core network (for example, between the UPF and the SMF). This, for example, produces the same advantages as previously described.

The first modification can maintain the reliability and/or the TSC even when a propagation state or a NW load state is changed.

### The Fourth Embodiment

In the communication system requiring the low latency, one device may be configured as the base station and the UPF. For example, the gNB-CU-UP and the UPF disclosed in Non-Patent Document 26 (TS38.401) may be integrated into one device (may be hereinafter referred to as an integrated UPF). The integrated UPF may be connected to other base stations.

However, the following problem occurs. Delay in the C-plane signaling still remains. Furthermore, transmitting and receiving small data using the C-plane has been studied. These cause a problem of failing to reduce the latency in the small data.

The fourth embodiment discloses a method for solving the problem.

One device is configured as the base station and the AMF. One device is configured as, for example, the gNB-CU-CP and the AMF (may be hereinafter referred to as an integrated AMF). The integrated AMF may be connected to other base stations.

The integrated AMF may include functions on the SMF. This can, for example, shorten the time required for the procedure on the PDU session.

The integrated AMF may include functions on the UPF. This can, for example, shorten the time for transmitting the small data from the C-plane to the U-plane.

The integrated AMF may broadcast or dedicatedly notify, to the UE, that its own device is the integrated AMF. The integrated AMF may perform the broadcast, for example, using system information. The UE may recognize that the base station to which the UE attempts to be connected is the integrated AMF, using the information. For example, the UE may be connected to the integrated AMF more preferentially than to other cells, using the information. The UE may be, for example, the UE requiring the low-latency communication. The UE may determine whether to establish the preferential connection, using information on the QoS to be supported by its own UE. This can, for example, prevent congestion caused by connection of many other UEs to the integrated AMF, and consequently reduce the latency.

The integrated UPF may broadcast and/or dedicatedly notify, to the UE, that its own device is the integrated UPF. The UE may recognize that the base station to which the UE attempts to be connected is the integrated UPF, using the information. For example, the UE may be connected to the integrated UPF more preferentially than to other cells, using the information. The UE may be, for example, the UE requiring the low-latency communication. The UE may determine whether to establish the preferential connection, using the information on the QoS to be supported by its own UE. This can, for example, prevent congestion caused by connection of many other UEs to the integrated UPF, and consequently reduce the latency in the U-plane.

Priorities may be assigned to the integrated AMF and the integrated UPF. The UE may determine whether to be preferentially connected to the integrated AMF or the integrated UPF, using the information on the QoS to be supported by its own UE. For example, when data requiring the low-latency communication is small in size and the frequency with which the data is transmitted is low, the UE may be preferentially connected to the integrated AMF. As another example, when data requiring the low-latency communication is large and the frequency with which the data is transmitted is high, the UE may be preferentially connected to the integrated UPF. This can, for example, maintain the QoS in the communication of the UE.

The fourth embodiment can reduce the latency in the C-plane signaling, and consequently reduce the latency in transmitting and receiving the small data.

The embodiments and the modifications are mere exemplifications of the present invention, and can be freely combined within the scope of the present invention. The arbitrary constituent elements of the embodiments and the modifications can be appropriately modified or omitted.

For example, a subframe in the embodiments and the modifications is an example time unit of communication in the fifth generation base station communication system. The subframe may be configured per scheduling. The processes described in the embodiments and the modifications as being performed per subframe may be performed per TTI, per slot, per sub-slot, or per mini-slot.

While the present invention is described in detail, the foregoing description is in all aspects illustrative and does not restrict the present invention. Therefore, numerous modifications and variations that have not yet been exemplified can be devised without departing from the scope of the present invention. The scope of the invention is defined by the appended claims.

### Description of Reference Rigns

- 200: communication system
- 202: communication terminal device
- 203: base station device
- 210: communication system

## Claims

1. A terminal apparatus (202) in a communication system (200), the communication system comprising:
the terminal apparatus; and
a plurality of base station apparatuses (203) configured to perform wireless communication with the terminal apparatus, the plurality of base station apparatuses comprising a master base station (223-1, 224-1, 226-1) configuring a master cell group, MCG, and a secondary base station (224-2, 226-2) configuring a secondary cell group, SCG,
wherein the terminal apparatus is configured to perform dual connectivity connecting to the master base station and the secondary base station,
the terminal apparatus is configured to transmit, to the master base station, UE capability information indicating that the terminal apparatus is capable of communicating with the secondary base station in a case in which an MCG failure occurs, and
the terminal apparatus is configured to perform communication with the secondary base station via the SCG in the case in which the MCG failure occurs.

2. The terminal apparatus according to claim 1, wherein the terminal apparatus is configured to transmit, to the secondary base station, Radio Resource Control , RRC, signaling including information on the MCG failure in the case in which the MCG failure occurs.

3. The terminal apparatus according to claim 2, wherein the terminal apparatus is configured to transmit the RRC signaling to the secondary base station by using signal radio bearer, SRB, 3.

4. The terminal apparatus according to claim 2, wherein the terminal apparatus is configured to transmit the RRC signaling to the secondary base station while maintaining a RRC connected state, in the case in which the MCG failure occurs.

5. The terminal apparatus according to claim 2, wherein the information on the MCG failure is transmitted from the secondary base station to the master base station.

6. The terminal apparatus according to claim 5, wherein the terminal apparatus is configured to receive signaling for recovering from the MCG failure, the signaling being transmitted from the master base station in response to reception of the information on the MCG failure.

7. The terminal apparatus according to claim 1, wherein the terminal apparatus is configured to connect to another master base station that is different from the master base station after the MCG failure occurs.

8. A communication system (200) comprising:
a terminal apparatus (202); and
a plurality of base station apparatuses (203) configured to perform wireless communication with the terminal apparatus, the plurality of base station apparatuses comprising a master base station (223-1, 224-1, 226-1) configuring a master cell group, MCG, and a secondary base station (224-2, 226-2) configuring a secondary cell group, SCG,
wherein the terminal apparatus is configured to perform dual connectivity connecting to the master base station and the secondary base station,
the terminal apparatus is configured to transmit, to the master base station, UE capability information indicating that the terminal apparatus is capable of communicating with the secondary base station in a case in which an MCG failure occurs, and
the terminal apparatus is configured to perform communication with the secondary base station via the SCG in the case in which the MCG failure occurs.

## Patentansprüche

1. Endgerät (202) in einem Kommunikationssystem (200), wobei das Kommunikationssystem das Folgende aufweist:
- das Endgerät; und
- eine Vielzahl von Basisstationsgeräten (203), die dazu konfiguriert sind, eine Drahtloskommunikation mit dem Endgerät durchführen, wobei die Vielzahl von Basisstationsgeräten eine Master-Basisstation (223-1, 224-1, 226-1), die eine Master-Zellgruppe, MCG, konfiguriert, und eine sekundäre Basisstation (224-2, 226-2) aufweist, die eine sekundäre Zellgruppe, SCG, konfiguriert,
- wobei das Endgerät dazu konfiguriert ist, eine duale Konnektivität durchzuführen, bei der es sowohl mit der Master-Basisstation als auch mit der sekundären Basisstation verbunden ist,
- das Endgerät dazu konfiguriert ist, an die Master-Basisstation UE-Fähigkeitsinformationen zu übermitteln, die angeben, dass das Endgerät dazu fähig ist, mit der sekundären Basisstation zu kommunizieren, wenn ein MCG-Ausfall auftritt, und
- das Endgerät dazu konfiguriert ist, eine Kommunikation mit der sekundären Basisstation über die SCG durchzuführen, wenn der MCG-Ausfall auftritt.

2. Endgerät nach Anspruch 1,
wobei das Endgerät dazu konfiguriert ist, an die sekundäre Basisstation eine Signalisierung gemäß Radio Resource Control, RRC, zu übertragen, die Informationen über den MCG-Ausfall enthält, wenn der MCG-Ausfall auftritt.

3. Endgerät nach Anspruch 2,
wobei das Endgerät dazu konfiguriert ist, die Signalisierung gemäß RRC an die sekundäre Basisstation unter Verwendung des Signalfunkträgers, SRB, zu übertragen.

4. Endgerät nach Anspruch 2,
wobei das Endgerät dazu konfiguriert ist, die Signalisierung gemäß RRC an die sekundäre Basisstation unter Aufrechterhalten eines RRC-Verbindungszustands zu übertragen, wenn der MCG-Ausfall auftritt.

5. Endgerät nach Anspruch 2,
wobei die Information über den MCG-Ausfall von der sekundären Basisstation an die Master-Basisstation übertragen wird.

6. Endgerät nach Anspruch 5,
wobei das Endgerät dazu konfiguriert ist, eine Signalisierung zum Wiederherstellen nach dem MCG-Ausfall zu empfangen, wobei die Signalisierung von der Master-Basisstation in Reaktion auf den Empfang der Information über den MCG-Ausfall übertragen wird.

7. Endgerät nach Anspruch 1,
wobei das Endgerät dazu konfiguriert ist, sich mit einer anderen Master-Basisstation zu verbinden, die sich von der Master-Basisstation unterscheidet, nachdem der MCG-Ausfall aufgetreten ist.

8. Kommunikationssystem (200), welches das Folgende aufweist:
- ein Endgerät (202); und
- eine Vielzahl von Basisstationsgeräten (203), die dazu konfiguriert sind, eine Drahtloskommunikation mit dem Endgerät durchführen, wobei die Vielzahl von Basisstationsgeräten eine Master-Basisstation (223-1, 224-1, 226-1), die eine Master-Zellgruppe, MCG, konfiguriert, und eine sekundäre Basisstation (224-2, 226-2) aufweist, die eine sekundäre Zellgruppe, SCG, konfiguriert,
- wobei das Endgerät dazu konfiguriert ist, eine duale Konnektivität durchzuführen, bei der es sowohl mit der Master-Basisstation als auch mit der sekundären Basisstation verbunden ist,
- das Endgerät dazu konfiguriert ist, an die Master-Basisstation UE-Fähigkeitsinformationen zu übermitteln, die angeben, dass das Endgerät dazu fähig ist, mit der sekundären Basisstation zu kommunizieren, wenn ein MCG-Ausfall auftritt, und
- das Endgerät dazu konfiguriert ist, eine Kommunikation mit der sekundären Basisstation über die SCG durchzuführen, wenn der MCG-Ausfall auftritt.

## Revendications

1. Appareil terminal (202) dans un système de communication (200), le système de communication comprenant :
l'appareil terminal ; et
une pluralité d'appareils de station de base (203) configurés pour effectuer une communication sans fil avec l'appareil terminal, la pluralité d'appareils de station de base comprenant une station de base maître (223-1, 224-1, 226-1) configurant un groupe de cellules maître, MCG, et une station de base secondaire (224-2, 226-2) configurant un groupe de cellules secondaire, SCG,
dans lequel l'appareil terminal est configuré pour effectuer une double connectivité en se connectant à la station de base principale et à la station de base secondaire,
l'appareil terminal est configuré pour transmettre, à la station de base maître, des informations de capacité UE indiquant que l'appareil terminal est capable de communiquer avec la station de base secondaire dans le cas où une défaillance du MCG se produit, et
l'appareil terminal est configuré pour effectuer une communication avec la station de base secondaire via le SCG dans le cas où la défaillance du MCG se produit.

2. Appareil terminal selon la revendication 1,
dans lequel l'appareil terminal est configuré pour transmettre, à la station de base secondaire, une signalisation de contrôle des ressources radio, RRC, incluant des informations sur la défaillance du MCG dans le cas où la défaillance du MCG se produit.

3. Appareil terminal selon la revendication 2,
dans lequel l'appareil terminal est configuré pour transmettre la signalisation RRC à la station de base secondaire en utilisant un support de signalisation radio, SRB.

4. Appareil terminal selon la revendication 2,
dans lequel l'appareil terminal est configuré pour transmettre la signalisation RRC à la station de base secondaire tout en maintenant un état RRC connecté, dans le cas où la défaillance du MCG se produit.

5. Appareil terminal selon la revendication 2,
dans lequel les informations sur la défaillance du MCG sont transmises de la station de base secondaire à la station de base maître.

6. Appareil terminal selon la revendication 5,
dans lequel l'appareil terminal est configuré pour recevoir une signalisation permettant une reprise après la défaillance du MCG, la signalisation étant transmise depuis la station de base maître en réponse à la réception des informations sur la défaillance du MCG.

7. Appareil terminal selon la revendication 1,
dans lequel l'appareil terminal est configuré pour se connecter à une autre station de base maître, différente de la station de base maître, après que la défaillance du MCG s'est produite.

8. Système de communication (200) comprenant :
un appareil terminal (202) ; et
une pluralité d'appareils de station de base (203) configurés pour effectuer une communication sans fil avec l'appareil terminal, la pluralité d'appareils de station de base comprenant une station de base maître (223-1, 224-1, 226-1) configurant un groupe de cellules maître, MCG, et une station de base secondaire (224-2, 226-2) configurant un groupe de cellules secondaire, SCG,
dans lequel l'appareil terminal est configuré pour effectuer une double connectivité en se connectant à la station de base principale et à la station de base secondaire,
l'appareil terminal est configuré pour transmettre, à la station de base maître, des informations de capacité UE indiquant que l'appareil terminal est capable de communiquer avec la station de base secondaire dans le cas où une défaillance du MCG se produit, et
l'appareil terminal est configuré pour effectuer une communication avec la station de base secondaire via le SCG dans le cas où la défaillance du MCG se produit.
